(19)

Europäisches
Patentamt
European
Patent Office
Office européen
des brevets

(11) **EP 2 611 092 B1**

(12) **EUROPEAN PATENT SPECIFICATION**

(45) Date of publication and mention
of the grant of the patent:
**20.04.2016 Bulletin 2016/16**

(51) Int Cl.:
*H04L 27/38* (2006.01)  *H04L 25/03* (2006.01)

(21) Application number: **11010274.6**

(22) Date of filing: **29.12.2011**

(54) **Optimal piecewise linear LLR approximation for QAM demodulation**

Optimale stückweise lineare LLR-Annäherung für QAM Demodulation

Approximation LLR linéaire optimale en plusieurs parties pour démodulation QAM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.07.2013 Bulletin 2013/27**

(73) Proprietor: **CommAgility Limited
Holywell Park
Loughborough LE11 3AQ (GB)**

(72) Inventor: **Isa, Kenan Nevzat
47051 Duisburg (DE)**

(74) Representative: **Eisenführ Speiser
Patentanwälte Rechtsanwälte PartGmbB
Postfach 31 02 60
80102 München (DE)**

(56) References cited:
**WO-A2-2007/106876**

• **JIN WHAN KANG ET AL: "A New Demapper for
BICM System with HARQ", VEHICULAR
TECHNOLOGY CONFERENCE FALL (VTC
2009-FALL), 2009 IEEE 70TH, IEEE,
PISCATAWAY, NJ, USA, 20 September 2009
(2009-09-20), pages 1-5, XP031600070, ISBN:
978-1-4244-2514-3**
• **TOSATO F ET AL: "Simplified soft-output
demapper for binary interleaved COFDM with
application to HIPERLAN/2", PROCEEDINGS OF
IEEE INTERNATIONAL CONFERENCE ON
COMMUNICATIONS - 28 APRIL-2 MAY 2002 - NEW
YORK, NY, USA, IEEE, PISCATAWAY, NJ, USA,
vol. 2, 28 April 2002 (2002-04-28), pages 664-668,
XP010589578, DOI: 10.1109/ICC.2002.996940
ISBN: 978-0-7803-7400-3**
• **PYNDIAH R ET AL: "Performance of block turbo
coded 16-QAM and 64-QAM modulations",
GLOBAL TELECOMMUNICATIONS
CONFERENCE, 1995. CONFERENCE RECORD.
COMMUNI CATION THEORY
MINI-CONFERENCE, GLOBECOM '95., IEEE
SINGAPORE 13-17 NOV. 1995, NEW YORK, NY,
USA,IEEE, US, vol. 2, 13 November 1995
(1995-11-13), pages 1039-1043, XP010164530,
DOI: 10.1109/GLOCOM.1995.502563 ISBN:
978-0-7803-2509-8**

EP 2 611 092 B1

**Description**

FIELD OF THE INVENTION

The present invention relates to a method, apparatus and computer program product for LLR approximation in a communication system.

BACKGROUND OF THE INVENTION

The performance of communication systems can be improved by new signal processing techniques. More specifically, improved receiver performance can reduce the required transmitter power level, so that battery life of handsets can be enhanced or achievable transmission throughput at constant channel signal-to-noise ratio (SNR) level can be improved.

Performance gain is required especially in the low SNR region that is most important for third to fourth generation (3-4G) communication systems with hybrid automatic repeat request (HARQ), since these systems are pushed to the limit to exploit the channel capacity at maximum. For example in Long Term Evolution (LTE) systems, the physical downlink shared channel operates at 10% Block Error Rate (BLER) sustained by the channel quality indication (CQI) reports between communicating elements. Hence, LTE systems operate at low SNR region. Additionally, the performance gain depends on system parameters like modulation scheme.

In case of quadrature amplitude modulation (QAM) systems like 16QAM, 64QAM, and 256QAM, each axis - real and imaginary components - carries multiple bits and calculation of the soft-bits at a demapper using an exact log-likelihood ratio (LLR) expression has a high computational complexity. The demapper de-maps uniform QAM to bits used for channel decoding. It thus performs the complementary operation of the mapper by extracting the bitstream from the received complex stream. The most known soft-output demapper for coded OFDM systems with reduced computational complexity has been proposed by Tosato and Bisaglia: "Simplified soft-output demapper for binary interleaved COFDM with application to HIPERLAN/2", IEEE International Conference on Communications, 2002. ICC 2002. p664-668, vol.2, ISBN: 0-7803-7400-2. Pyndiah et al.: "Performance of block turbo coded 16-QAM and 64-QAM modulations", IEEE Global Telecommunications Conference, 1995, GLOBECOM '95, p1039-1043, vol.2, ISBN: 0-7803-2509-5 present high SNR LLR approximations for 16QAM, and use the 64QAM extensions for their simulations without presenting these in their paper.

The above work of Tosato and Bisaglia assumes single-input single-output (SISO) channel and a zero-forcing equalizer at the receiver that compensates for attenuation and phase shift in each data subcarrier. The disadvantage of the technique proposed by Tosato and Bisaglia is that it is not optimized for modem communication systems with HARQ and for the case when a single codeword is transmitted over multiple OFDM symbols. LLR expressions are normalized by $2/\sigma$ assuming the noise variance $\sigma^2$ is constant during an OFDM symbol, but this is not necessarily the case when the codeword is transmitted over multiple OFDM symbols or in case of retransmission when the LLR's are calculated from multiple receptions by adding together previous and newly received LLR's.

The applications of Tosato and Bisaglia's method have been investigated in more detail in the US 2004/0091058 A1 and the US 2009/0245433 A1. The extension of Tosato and Bisaglia's (2002) method to 8PSK and up to 256QAM constellations has been proposed in the above US 2009/0245433 A1. Also, in the US 2008/0232499 A1 the proposed method has been extended to higher order QAM constellations - up to 1024QAM. The disadvantage of this proposal is that it assumes flat fading channel. In the US 2008/0232499 A1 it has been realized that the recursive regular behavior of Tosato and Bisaglia's equations allows much simpler application to digital signal processors (DSPs) or Very High Speed Integrated Circuit (VHSIC) Hardware Description Language (VHDL). The main disadvantage of Tosato and Bisaglia (2002) is that the approximation has been carried out under high SNR assumption.

There are methods proposed to overcome the disadvantage of high SNR approximation. Allpress et al.: "Exact and approximated expressions of the log-likelihood ratio for 16-QAM signals", Thirty-Eighth Asilomar Conference on Signals, Systems and Computers 2004, p794-798, Vol.1, ISBN: 0-7803-8622-1, describes a max and modified max function which is used to approximate LLR in a better way without having the high SNR assumption. The new max function includes a correction term that is used to adjust the value of max function approximation used by Tosato and Bisaglia. The proposed technique is applied to 16QAM, but application to 64QAM is not considered.

Furthermore, Kang et al.: "A New Demapper for BICM System with HARQ", IEEE 70th Vehicular Technology Conference Fall (VTC 2009-Fall), p1-5, ISBN: 978-1-4244-2514-3, discloses a demapper to overcome the high SNR approximation disadvantage of Tosato and Bisaglia by introducing an additional piecewise linear function that approximates the effect of nonlinearity in exact LLR function. The one disadvantage of this proposal is that the definition of the additional piecewise linear function is not done systematically but heuristically. However, these LLR approximations are suboptimal and computationally complex.

WO2007106876A2 discloses techniques for efficiently and accurately computing log-likelihood ratio (LLRs) for code bits. A set of code bits may be mapped to a modulation symbol in a signal constellation. Different code bits in the set may be associated with different LLR functions. A receiver obtains received symbols for a transmission sent via a communication channel. The receiver derives LLRs for code bits based on the received symbols and piecewise linear approximation of at least one LLR function. The piecewise linear approximation of each LLR function may comprise one or more linear functions for one or more ranges of input values. The receiver may select one of the linear functions for each code bit based on a corresponding received symbol component value. The receiver may then derive an LLR for each code bit based on the linear function selected for that first code bit.

SUMMARY

It is an object of the present invention to provide a method and apparatus for approximating an exact LLR calculation at low computational complexity that can be used for practical receiver implementations.

This object is achieved by a method as claimed in claim 1, by an apparatus as claimed in claim 5, and by a computer program product as claimed in claim 9.

Accordingly, the exact LLR calculation is approximated by deriving optimal values of LLR coefficients based on a minimization of an expected LLR error between said exact LLR calculation and an LLR approximation, for LLR coefficient indices equal to one. It is searched for the optimal values of the LLR coefficients that minimize the expected LLR error for a specific value of the standard deviation $\sigma$ of the channel noise distribution (e.g. AWGN). If the LLR coefficient index is larger than one, the LLR coefficients are derived based on the requirement that the exact LLR calculation and the LLR approximation have the same sign. Thus, a systematic way for better and simpler LLR approximation is provided, so that a very simple piecewise linear LLR approximation can be derived without high SNR assumption. Based on simulation results it could be verified that it is a good approximation from performance point of view when 10% retransmission rate is targeted for throughput maximization in modern communication systems like High Speed Packet Access (HSPA), LTE, and LTE-Advanced. According to the proposed solution, LLR is approximated as a piecewise linear function where the function changes depending on the noise standard deviation $\sigma$, so that-exact LLR function can be approximated with minimum error considering the LLR value distribution. In other words, the LLR's that are expected more often are much closely approximated to the exact LLR than the LLR's that are not expected so often. This approach can be easily applied to Orthogonal Frequency Division Multiplexing (OFDM) systems considering that when the subcarrier channel frequency response is scaled to one, the subcarrier noise variance component $\sigma^2$ is scaled accordingly, and using the scaled noise variance $\sigma^2$ value in the proposed LLR approximation. In general, post-processing SNR estimate shall be a source for $\sigma^2$, considering the multiple-input multiple-output (MIMO) detector effect which is important when there are MIMO transmissions and multiple streams.

Hence, the proposed solution improves the performance of LLR computation (demodulator) while keeping the LLR expression linear, so that the algorithm complexity is suitable for practical receivers. The complexity of the linear LLR calculation is sustained while the used pre-calculated optimal values of the LLR coefficients are based on the channel signal to noise ratio (SNR) usually estimated at the receiver.

The above apparatuses may be implemented as hardware circuits integrated on a single chip or chip set, or wired on a circuit board. As an alternative, at least parts of the apparatuses may be implemented as a software program or routine control-ling a processor or computer device. As an example, the software program or routine may be implemented in C type programming language.

Other advantageous modifications are defined in the dependent claims.

BRIEF DESCRIPTION OF THE DRAWINGS

The invention will now be described in greater detail based on embodiments with reference to the accompanying drawings in which:

Fig. 1 shows a quadrature phase shift keying (QPSK) constellation mapping;

Fig. 2 shows a 16QAM constellation mapping;

Fig. 3 shows a diagram indicating LLR value for bit-1 for 16QAM;

Fig. 4 shows a diagram indicating LLR value for bit-3 for 16QAM;

Fig. 5 shows a 64QAM constellation mapping;

Fig. 6 shows a diagram indicating LLR value for bit-1 for 64QAM;

Fig. 7 shows a diagram indicating LLR value for bit-3 for 64QAM;

Fig. 8 shows a diagram indicating LLR value for bit-5 for 64QAM;

Fig. 9 shows a diagram indicating expected LLR error depending on the first LLR coefficient for bit-1 or bit-2 of 16QAM;

Fig. 10 shows a diagram indicating the optimal values of the first LLR coefficient for the proposed LLR calculation depending on $\sigma$ for bit-1 or bit-2 of 16QAM;

Fig. 11 shows a diagram indicating expected LLR error depending on the first LLR coefficient for bit-3 or bit-4 of 16QAM;

Fig. 12 shows a diagram indicating the optimal values of the first LLR coefficient for the proposed LLR calculation depending on $\sigma$ for bit-3 or bit-4 of 16QAM;

Fig. 13 shows a diagram indicating the optimal values of the second LLR coefficient for the proposed LLR calculation depending on $\sigma$ for bit-3 or bit-4 of 16QAM;

Fig. 14 shows a comparison diagram indicating the LLR's calculated using exact, reference, and proposed methods for bit-3 or bit-4 of received 16QAM sample;

Fig. 15 shows a diagram indicating expected LLR error depending on the first LLR coefficient for bit-1 or bit-2 of 64QAM;

Fig. 16 shows a diagram indicating the optimal values of the first LLR coefficient for the proposed LLR calculation depending on $\sigma$ for bit-1 or bit-2 of 64QAM;

Fig. 17 shows a diagram indicating expected LLR error depending on the first LLR coefficient for bit-3 or bit-4 of 64QAM;

Fig. 18 shows a diagram indicating the optimal values of the first LLR coefficient for the proposed LLR calculation depending on $\sigma$ for bit-3 or bit-4 of 64QAM;

Fig. 19 shows a diagram indicating the optimal values of the second LLR coefficient for the proposed LLR calculation depending on $\sigma$ for bit-3 or bit-4 of 64QAM;

Fig. 20 shows a diagram indicating expected LLR error depending on the first LLR coefficient for bit-5 or bit-6 of 64QAM;

Fig. 21 shows a diagram indicating the optimal values of the first LLR coefficient for the proposed LLR calculation depending on $\sigma$ for bit-5 or bit-6 of 64QAM;

Fig. 22 shows a diagram indicating the optimal values of the second LLR coefficient for the proposed LLR calculation depending on $\sigma$ for bit-5 or bit-6 of 64QAM;

Fig. 23 shows a diagram indicating the optimal values of the third LLR coefficient for the proposed LLR calculation depending on $\sigma$ for bit-5 or bit-6 of 64QAM;

Fig. 24 shows a comparison diagram indicating the LLR's calculated using exact, reference, and proposed methods for bit-5 or bit-6 of received 64QAM sample;

Fig. 25 shows a block diagram of a system used for BLER performance evaluation

Fig. 26 shows a comparison diagram indicating BLER performance results for 16QAM;

Fig. 27 shows a comparison diagram indicating BLER performance results for 64QAM; and

Fig. 28 shows a schematic block diagram of a software-based implementation according to an embodiment.

DESCRIPTION OF THE EMBODIMENTS

In the following, embodiments of the present invention will be described based on an approximation of the exact LLR calculation with the purpose of obtaining LLR equations with low computational complexity that can be used for practical receiver implementations. The proposed solution can be applied to any communication standard that uses Gray mapped higher order modulation schemes like 16QAM, 64QAM, and 256QAM to improve the receiver performance with small increase in receiver complexity. Furthermore, the proposed solution can be defined as an optimal piecewise linear LLR approximation and extends the initially described work of Pyndiah et al. (1995) which approximates the exact LLR expressions by assuming high SNR ($SNR \rightarrow \infty$). The proposed optimal piecewise linear LLR approximation provides a block error rate (BLER) performance close to the performance of exact LLR. The following embodiments are directed to solutions for 16QAM and 64QAM, but can be extended for higher order constellations like 128QAM, 256QAM, etc.

According to the embodiments, the receiver calculates LLR by multiplying the first LLR coefficient with the real (I) or imaginary (Q) part of a symbol after equalization, considering SNR dependent threshold regions each having a different SNR dependent LLR coefficient with index bigger than one. The proposed approximation has been applied to 16QAM and 64QAM constellations and the SNR dependent LLR coefficients have been identified for each bit of each constellation. Plots for the LLR coefficients have been generated for 16QAM and 64QAM constellations. Depending on the implementation, a small lookup table with approximately 20 entries or polynomial approximation of 3rd or 4th degree can be used for obtaining the LLR coefficients at the receiver. The LLR approximation error reduction with the proposed solution has been shown by comparing LLR curves of the exact LLR, the reference piecewise linear LLR approximation, and the proposed optimal piecewise linear LLR approximation. The block error rate (BLER) performance benefits of the proposed LLR approximation for 16QAM and 64QAM have been shown by evaluating the BLER performance gain using a Monte Carlo simulation for a simple communication system that employs turbo encoder and turbo decoder by using the exact LLR, the reference piecewise linear LLR approximation, and the proposed optimal piecewise linear LLR approximation.

Since the proposed approximation is an extension to the above mentioned approximations of Tosato and Bisaglia (2002) and Pyndiah et al. (1995), the technical details of these are described below.

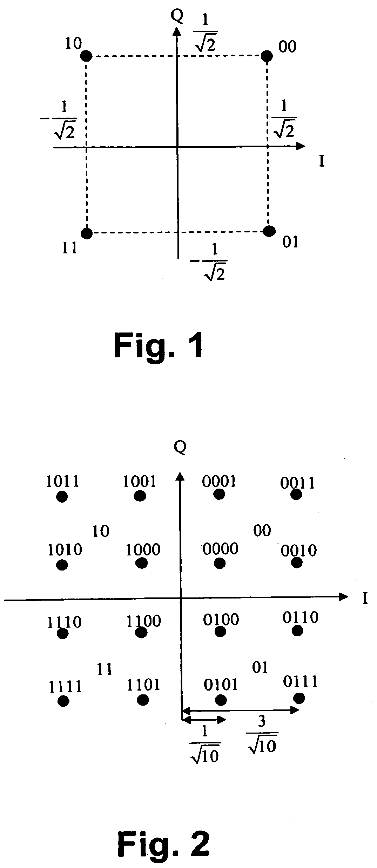

Fig. 1 shows a QPSK symbol constellation mapping according to the 3rd Generation Partnership Project (3GPP) specification TS 36.211, section 7.1.2. Each symbol carries two bits $b(i)$ and $b(i + 1)$. The first bit is the least significant bit (LSB). In this case, there are two LLR values $L_{4,1}$ and $L_{4,2}$ calculated at the receiver. For simplicity, here, $b_1$ is used to refer to the first bit $b(i)$ and $b_2$ is used to refer to the second bit $b(i + 1)$.

In general the transmitted sample $y$, noise $n$, and received sample r are all complex values. Hence, the receiver can split the r value into real and imaginary parts $r_I$ and $r_Q$, respectively. As seen from Fig. 1, $b_1$ modulates the real component $y_1$ and $b_2$ modulates the complex component $y_Q$ of transmitted symbol $y$, given with the following two equations:

$$y_I = \frac{1}{\sqrt{2}}(-2b_1 + 1) \quad y_Q = \frac{1}{\sqrt{2}}(-2b_2 + 1).$$

If the channel is modeled as an Additive White Gaussian Noise (AWGN) with standard deviation $\sigma$, variance $\sigma^2$, and noise components $n_I$ and $n_Q$, then:

$$r_I = y_I + n_I \quad r_Q = y_Q + n_Q$$

where $n \sim N(0, \sigma^2)$. Similar to BPSK case, from here the LLR's of $b_1$ and $b_2$ can be written as follows:

$$L_{4,1}(r_I) = \log \frac{P\left(y = +\frac{1}{\sqrt{2}} \mid r_I\right)}{P\left(y = -\frac{1}{\sqrt{2}} \mid r_I\right)} = \log \frac{\frac{1}{\sqrt{2\pi}\sigma} \exp\left[-\frac{\left(r_I - 1/\sqrt{2}\right)^2}{2\sigma^2}\right]}{\frac{1}{\sqrt{2\pi}\sigma} \exp\left[-\frac{\left(r_I + 1/\sqrt{2}\right)^2}{2\sigma^2}\right]} = \frac{-\left(r_I - 1/\sqrt{2}\right)^2 + \left(r_I + 1/\sqrt{2}\right)^2}{2\sigma^2}$$

wherein:

$$L_{4,1}(r_I) = \frac{\sqrt{2}}{\sigma^2} r_I \quad L_{4,2}(r_Q) = \frac{\sqrt{2}}{\sigma^2} r_Q.$$

Since both of these equations are exact and linear at the same time, there is no need for any LLR approximation when QPSK is used as constellation. At the receiver, the exact LLR equations can be used.

Fig. 2 shows a 16QAM symbol constellation mapping according to 3GPP specification TS 36.211 Section 7.1.3. Each symbol carries four bits $b$(i), $b$(i + 1), $b$(i + 2) and $b$(i + 3). The first bit corresponds to the LSB. Hence, the demapper calculates four LLR's for each symbol denoted by $L_{16,1}$, $L_{16,2}$, $L_{16,3}$, and $L_{16,4}$. For simplicity $b_1$, $b_2$, $b_3$, $b_4$ are used instead of $b$(i), $b$(i + 1), $b$(i + 2), $b$(i + 3), respectively. In the following analysis, it is assumed that the source bits $b_1$, $b_2$, $b_3$, $b_4$ can take the values 0 and 1 with equal probability, and it is assumed that the source bits are uncorrelated between each other. In the following, exact LLR's and approximate LLR's are derived for each of the source bits.

Following the assumptions and based on Fig. 2, it is clear that $y_1$ can have the values $-3/\sqrt{10}, -1/\sqrt{10}, 1/\sqrt{10},$ and $3/\sqrt{10}$ depending on $b_1$. The probabilities **P** of these values are dependent on $b_1$ as given in **Table 1.**

**Table 1**

| $y_1$ | $P(y_1 | b_1 = 0)$ | $P(y_1 | b_1 = 1)$ |
|---|---|---|
| $-3/\sqrt{10}$ | 0 | 0.5 |
| $-1/\sqrt{10}$ | 0 | 0.5 |
| $1/\sqrt{10}$ | 0.5 | 0 |
| $3/\sqrt{10}$ | 0.5 | 0 |

Then, starting with the LLR definition:

$$L_{16,1}(r_I) = \log\frac{P(b_1 = 0)}{P(b_1 = 1)} = \log\frac{\frac{1}{2}P\left(y_I = \frac{1}{\sqrt{10}}|r_I\right) + \frac{1}{2}P\left(y_I = \frac{3}{\sqrt{10}}|r_I\right)}{\frac{1}{2}P\left(y_I = -\frac{1}{\sqrt{10}}|r_I\right) + \frac{1}{2}P\left(y_I = -\frac{3}{\sqrt{10}}|r_I\right)}$$

under consideration of AWGN noise:

$$L_{16,1}(r_I) = \log\frac{\frac{1}{2\sqrt{2\pi}\sigma}\exp\left[-\frac{\left(r_I - 1/\sqrt{10}\right)^2}{2\sigma^2}\right] + \frac{1}{2\sqrt{2\pi}\sigma}\exp\left[-\frac{\left(r_I - 3/\sqrt{10}\right)^2}{2\sigma^2}\right]}{\frac{1}{2\sqrt{2\pi}\sigma}\exp\left[-\frac{\left(r_I + 1/\sqrt{10}\right)^2}{2\sigma^2}\right] + \frac{1}{2\sqrt{2\pi}\sigma}\exp\left[-\frac{\left(r_I + 3/\sqrt{10}\right)^2}{2\sigma^2}\right]}$$

This can be simplified to:

$$L_{16,1}(r_I) = \log \frac{\exp\left[-\frac{\left(r_I - 1/\sqrt{10}\right)^2}{2\sigma^2}\right] + \exp\left[-\frac{\left(r_I - 3/\sqrt{10}\right)^2}{2\sigma^2}\right]}{\exp\left[-\frac{\left(r_I + 1/\sqrt{10}\right)^2}{2\sigma^2}\right] + \exp\left[-\frac{\left(r_I + 3/\sqrt{10}\right)^2}{2\sigma^2}\right]}.$$

One approach to simplify this calculation is to set the thresholds for $r_1$ to $-2/\sqrt{10}$ and $2/\sqrt{10}$, so that the approximation of $L_{16.1}(r_1)$ can be obtained depending on the $r_1$ and the biggest exponential term in nominator and denominator. If $r_1 < -2/\sqrt{10}$ then:

$$L_{16,1}(r_I) \approx \log \frac{\exp\left[-\frac{\left(r_I - 1/\sqrt{10}\right)^2}{2\sigma^2}\right]}{\exp\left[-\frac{\left(r_I + 3/\sqrt{10}\right)^2}{2\sigma^2}\right]} = \frac{-\left(r_I - \frac{1}{\sqrt{10}}\right)^2 + \left(r_I + \frac{3}{\sqrt{10}}\right)^2}{2\sigma^2}.$$

which can be further simplified to:

$$L_{16,1}(r_I) \approx \frac{2}{5\sigma^2}\left(\sqrt{10}r_I + 1\right).$$

If $-2/\sqrt{10} < r_I < 2/\sqrt{10}$ then:

$$L_{16,1}(r_I) \approx \log \frac{\exp\left[-\frac{\left(r_I - 1/\sqrt{10}\right)^2}{2\sigma^2}\right]}{\exp\left[-\frac{\left(r_I + 1/\sqrt{10}\right)^2}{2\sigma^2}\right]} = \frac{-\left(r_I - \frac{1}{\sqrt{10}}\right)^2 + \left(r_I + \frac{1}{\sqrt{10}}\right)^2}{2\sigma^2}.$$

which can be further simplified to:

$$L_{16,1}(r_I) \approx \frac{\sqrt{10}}{5\sigma^2}r_I.$$

If $2/\sqrt{10} < r_I$ then:

$$L_{16,1}(r_I) \approx \log \frac{\exp\left[-\frac{\left(r_I - 3/\sqrt{10}\right)^2}{2\sigma^2}\right]}{\exp\left[-\frac{\left(r_I + 1/\sqrt{10}\right)^2}{2\sigma^2}\right]} = \frac{-\left(r_I - \frac{3}{\sqrt{10}}\right)^2 + \left(r_I + \frac{1}{\sqrt{10}}\right)^2}{2\sigma^2}$$

which can be further simplified to:

$$L_{16,1}(r_I) \approx \frac{2}{5\sigma^2}\left(\sqrt{10}r_I - 1\right).$$

Summarizing:

$$L_{16,1}(r_I) \approx \begin{cases} \frac{2}{5\sigma^2}\left(\sqrt{10}r_I + 1\right) & r_I < -2/\sqrt{10} \\ \frac{\sqrt{10}}{5\sigma^2}r_I & -2/\sqrt{10} < r_I < 2/\sqrt{10} \\ \frac{2}{5\sigma^2}\left(\sqrt{10}r_I - 1\right) & 2/\sqrt{10} < r_I \end{cases}.$$

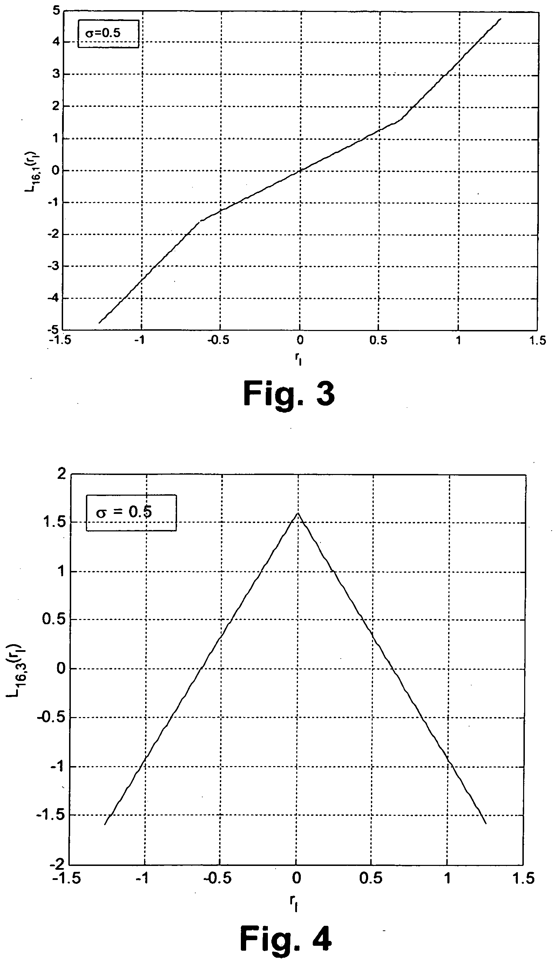

Fig. 3 shows a plot for this approximate LLR function for $\sigma = 0.5$. As can be gathered from Fig. 3 even more rough approximation can be performed by setting:

$$L_{16,1}(r_I) \approx \frac{\sqrt{10}}{5\sigma^2}r_I.$$

For $b_2$ the same is valid as for $b_1$ except that $y_Q$ should be considered instead of $y_I$ Hence the result can be derived similarly as:

$$L_{16,2}(r_Q) \approx \begin{cases} \frac{2}{5\sigma^2}\left(\sqrt{10}r_Q + 1\right) & r_Q < -2/\sqrt{10} \\ \frac{\sqrt{10}}{5\sigma^2}r_Q & -2/\sqrt{10} < r_Q < 2/\sqrt{10} \\ \frac{2}{5\sigma^2}\left(\sqrt{10}r_Q - 1\right) & 2/\sqrt{10} < r_Q \end{cases}$$

or with a more rough approximation:

$$L_{16,2}(r_Q) \approx \frac{\sqrt{10}}{5\sigma^2}r_Q.$$

Following the assumptions and from Fig. 2, it is clear that $y_1$ can have the values $-3/\sqrt{10}, -1/\sqrt{10},$

$1/\sqrt{10},$ and $3/\sqrt{10}$ depending on $b_3$. The probabilities P of these values depend on $b_3$ and are given in **Table 2.**

**Table 2**

| $y_1$ | $P(y_1 \mid b_3 = 0)$ | $P(y_1 \mid b_3 = 1)$ |
|---|---|---|
| $-3/\sqrt{10}$ | 0 | 0.5 |
| $-1/\sqrt{10}$ | 0.5 | 0 |
| $1/\sqrt{10}$ | 0.5 | 0 |
| $3/\sqrt{10}$ | 0 | 0.5 |

Then, starting with the LLR definition:

$$L_{16,3}(r_l) = \log \frac{P(b_3 = 0)}{P(b_3 = 1)} = \log \frac{\frac{1}{2} P\left(y_l = -\frac{1}{\sqrt{10}} \mid r_l\right) + \frac{1}{2} P\left(y_l = \frac{1}{\sqrt{10}} \mid r_l\right)}{\frac{1}{2} P\left(y_l = -\frac{3}{\sqrt{10}} \mid r_l\right) + \frac{1}{2} P\left(y_l = \frac{3}{\sqrt{10}} \mid r_l\right)}$$

under consideration of AWGN noise:

$$L_{16,3}(r_l) = \log \frac{\exp\left[-\frac{\left(r_l + 1/\sqrt{10}\right)^2}{2\sigma^2}\right] + \exp\left[-\frac{\left(r_l - 1/\sqrt{10}\right)^2}{2\sigma^2}\right]}{\exp\left[-\frac{\left(r_l + 3/\sqrt{10}\right)^2}{2\sigma^2}\right] + \exp\left[-\frac{\left(r_l - 3/\sqrt{10}\right)^2}{2\sigma^2}\right]}.$$

One approach to simplify this calculation is to set a threshold for $r_1$ at 0, so that the approximation of $L_{16,3}(r_1)$ can be obtained depending on the $r_1$. If $r_1 < 0$ then:

$$L_{16,3}(r_l) \approx \log \frac{\exp\left[-\frac{\left(r_l + 1/\sqrt{10}\right)^2}{2\sigma^2}\right]}{\exp\left[-\frac{\left(r_l + 3/\sqrt{10}\right)^2}{2\sigma^2}\right]} = \frac{-\left(r_l + \frac{1}{\sqrt{10}}\right)^2 + \left(r_l + \frac{3}{\sqrt{10}}\right)^2}{2\sigma^2}$$

which can be further simplified to:

$$L_{16,3}(r_l) \approx \frac{1}{5\sigma^2}\left(\sqrt{10} r_l + 2\right).$$

If $r_1 > 0$ then:

9

$$L_{16,3}(r_I) \approx \log \frac{\exp\left[-\frac{\left(r_I - 1/\sqrt{10}\right)^2}{2\sigma^2}\right]}{\exp\left[-\frac{\left(r_I - 3/\sqrt{10}\right)^2}{2\sigma^2}\right]} = \frac{-\left(r_I - \frac{1}{\sqrt{10}}\right)^2 + \left(r_I - \frac{3}{\sqrt{10}}\right)^2}{2\sigma^2}$$

which can be further simplified to:

$$L_{16,3}(r_I) \approx \frac{1}{5\sigma^2}\left(-\sqrt{10}r_I + 2\right).$$

Summarizing:

$$L_{16,3}(r_I) \approx \begin{cases} \frac{1}{5\sigma^2}\left(\sqrt{10}r_I + 2\right) & r_I < 0 \\ \frac{1}{5\sigma^2}\left(-\sqrt{10}r_I + 2\right) & r_I > 0 \end{cases}$$

Or:

$$L_{16,3}(r_I) \approx \frac{1}{5\sigma^2}\left(-\sqrt{10}|r_I| + 2\right),$$

Fig. 4 shows a plot for this approximate LLR function for $\sigma = 0.5$.

For $b_4$ the same is valid as for $b_3$ except that $y_Q$ should be considered instead of $y_I$. Hence the result can be derived similarly as:

$$L_{16,4}(r_Q) \approx \frac{1}{5\sigma^2}\left(-\sqrt{10}|r_Q| + 2\right).$$

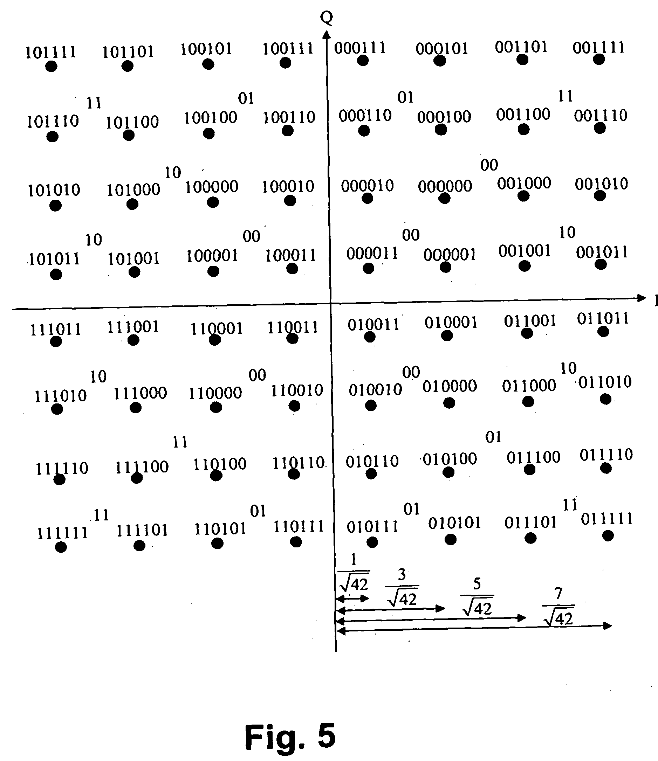

Fig. 5 shows a 64QAM symbol constellation mapping according to the 3GPP specification TS 36.211 Section 7.1.4. Each symbol carries six bits $b(i)$, $b(i + 1)$, $b(i + 2)$, $b(i + 3)$, $b(i + 4)$, and $b(i + 5)$. The first bit corresponds to the LSB. Hence, the Equalizer/Demapper calculates six LLR's for each symbol denoted by $L_{64,1}$, $L_{64,2}$, $L_{64,3}$, $L_{64,4}$, $L_{64,5}$, and $L_{64,6}$. For simplicity $b_1$, $b_2$, $b_3$, $b_4$, $b_5$, $b_6$ are used instead of $b(i)$, $b(i + 1)$, $b(i + 2)$, $b(i + 3)$, $b(i + 4)$, $b(i + 5)$, respectively. In the following analysis, it is assumed that the source bits $b_1$, $b_2$, $b_3$, $b_4$, $b_5$, $b_6$ can take the values 0 and 1 with equal probability, and it is assumed that the source bits are uncorrelated between each other.

In the following, exact LLR's and approximate LLR's are derived for each of the source bits.

Following the assumptions and from Fig. 5, it is clear that $y_1$ can have any of the following eight values $\pm 7/\sqrt{42}, \pm 5/\sqrt{42}, \pm 3/\sqrt{42}, \pm 1/\sqrt{42},$ depending on $b_1$. The probabilities P of these values depend on $b_1$ and are given in **Table 3.**

**Table 3**

| $y_1$ | $P(y_1|b_1 = 0)$ | $P(y_1|b_1 = 1)$ |
|---|---|---|
| $-7/\sqrt{42}$ | 0 | 0.25 |
| $-5/\sqrt{42}$ | 0 | 0.25 |

(continued)

| $y_1$ | $P(y_1 \mid b_1 = 0)$ | $P(y_1 \mid b_1 = 1)$ |
|---|---|---|
| $-3/\sqrt{42}$ | 0 | 0.25 |
| $-1/\sqrt{42}$ | 0 | 0.25 |
| $1/\sqrt{42}$ | 0.25 | 0 |
| $3/\sqrt{42}$ | 0.25 | 0 |
| $5/\sqrt{42}$ | 0.25 | 0 |
| $7/\sqrt{42}$ | 0.25 | 0 |

Then, starting with the LLR definition:

$$L_{64,1}(r_I) = \log \frac{\frac{1}{4}P\!\left(y_I = \frac{1}{\sqrt{42}} \mid r_I\right) + \frac{1}{4}P\!\left(y_I = \frac{3}{\sqrt{42}} \mid r_I\right) + \frac{1}{4}P\!\left(y_I = \frac{5}{\sqrt{42}} \mid r_I\right) + \frac{1}{4}P\!\left(y_I = \frac{7}{\sqrt{42}} \mid r_I\right)}{\frac{1}{4}P\!\left(y_I = -\frac{1}{\sqrt{42}} \mid r_I\right) + \frac{1}{4}P\!\left(y_I = -\frac{3}{\sqrt{42}} \mid r_I\right) + \frac{1}{4}P\!\left(y_I = -\frac{5}{\sqrt{42}} \mid r_I\right) + \frac{1}{4}P\!\left(y_I = -\frac{7}{\sqrt{42}} \mid r_I\right)}$$

under consideration of AWGN noise:

$$L_{64,1}(r_I) = \log \frac{\exp\!\left[-\frac{\left(r_I - \frac{1}{\sqrt{42}}\right)^2}{2\sigma^2}\right] + \exp\!\left[-\frac{\left(r_I - \frac{3}{\sqrt{42}}\right)^2}{2\sigma^2}\right] + \exp\!\left[-\frac{\left(r_I - \frac{5}{\sqrt{42}}\right)^2}{2\sigma^2}\right] + \exp\!\left[-\frac{\left(r_I - \frac{7}{\sqrt{42}}\right)^2}{2\sigma^2}\right]}{\exp\!\left[-\frac{\left(r_I + \frac{1}{\sqrt{42}}\right)^2}{2\sigma^2}\right] + \exp\!\left[-\frac{\left(r_I + \frac{3}{\sqrt{42}}\right)^2}{2\sigma^2}\right] + \exp\!\left[-\frac{\left(r_I + \frac{5}{\sqrt{42}}\right)^2}{2\sigma^2}\right] + \exp\!\left[-\frac{\left(r_I + \frac{7}{\sqrt{42}}\right)^2}{2\sigma^2}\right]}$$

One approach to simplify this calculation is to set the thresholds for $r_1$ at $\pm 6/\sqrt{42}, \pm 4/\sqrt{42}, \pm 2/\sqrt{42},$ so that the approximation of $L_{64,1}(r_1)$ can be obtained depending on the $r_1$ and the biggest exponential term in nominator and denominator.

If $r_I < -6/\sqrt{42}$ then:

$$L_{64,1}(r_I) \approx \log \frac{\exp\!\left[-\frac{\left(r_I - 1/\sqrt{42}\right)^2}{2\sigma^2}\right]}{\exp\!\left[-\frac{\left(r_I + 7/\sqrt{42}\right)^2}{2\sigma^2}\right]} = \frac{-\left(r_I - \frac{1}{\sqrt{42}}\right)^2 + \left(r_I + \frac{7}{\sqrt{42}}\right)^2}{2\sigma^2}$$

Which can be further simplified to:

$$L_{64,1}(r_I) \approx \frac{4}{21\sigma^2}\left(\sqrt{42}r_I + 3\right)$$

If $-6/\sqrt{42} < r_I < -4/\sqrt{42}$ then:

$$L_{64,1}(r_I) \approx \log\frac{\exp\left[-\frac{\left(r_I - 1/\sqrt{42}\right)^2}{2\sigma^2}\right]}{\exp\left[-\frac{\left(r_I + 5/\sqrt{42}\right)^2}{2\sigma^2}\right]} = \frac{-\left(r_I - \frac{1}{\sqrt{42}}\right)^2 + \left(r_I + \frac{5}{\sqrt{42}}\right)^2}{2\sigma^2}$$

which can be further simplified to:

$$L_{64,1}(r_I) \approx \frac{1}{7\sigma^2}\left(\sqrt{42}r_I + 2\right)$$

If $-4/\sqrt{42} < r_I < -2/\sqrt{42}$ then:

$$L_{64,1}(r_I) \approx \log\frac{\exp\left[-\frac{\left(r_I - 1/\sqrt{42}\right)^2}{2\sigma^2}\right]}{\exp\left[-\frac{\left(r_I + 3/\sqrt{42}\right)^2}{2\sigma^2}\right]} = \frac{-\left(r_I - \frac{1}{\sqrt{42}}\right)^2 + \left(r_I + \frac{3}{\sqrt{42}}\right)^2}{2\sigma^2}$$

which can be further simplified to:

$$L_{64,1}(r_I) \approx \frac{2}{21\sigma^2}\left(\sqrt{42}r_I + 1\right)$$

If $-2/\sqrt{42} < r_I < 2/\sqrt{42}$ then:

$$L_{64,1}(r_I) \approx \frac{-\left(r_I - \frac{1}{\sqrt{42}}\right)^2 + \left(r_I + \frac{1}{\sqrt{42}}\right)^2}{2\sigma^2}$$

which can be further simplified to:

$$L_{64,1}(r_I) \approx \frac{\sqrt{42}}{21\sigma^2} r_I$$

If $2/\sqrt{42} < r_I < 4/\sqrt{42}$ then:

$$L_{64,1}(r_I) \approx \frac{-\left(r_I - \frac{3}{\sqrt{42}}\right)^2 + \left(r_I + \frac{1}{\sqrt{42}}\right)^2}{2\sigma^2}$$

which can be further simplified to:

$$L_{64,1}(r_I) \approx \frac{2}{21\sigma^2}\left(\sqrt{42}r_I - 1\right)$$

If $4/\sqrt{42} < r_I < 6/\sqrt{42}$ then:

$$L_{64,1}(r_I) \approx \frac{-\left(r_I - \frac{5}{\sqrt{42}}\right)^2 + \left(r_I + \frac{1}{\sqrt{42}}\right)^2}{2\sigma^2}$$

which can be further simplified to:

$$L_{64,1}(r_I) \approx \frac{1}{7\sigma^2}\left(\sqrt{42}r_I - 2\right)$$

If $6/\sqrt{42} < r_I$ then:

$$L_{64,1}(r_I) \approx \frac{-\left(r_I - \frac{7}{\sqrt{42}}\right)^2 + \left(r_I + \frac{1}{\sqrt{42}}\right)^2}{2\sigma^2}$$

which can be further simplified to:

$$L_{64,1}(r_I) \approx \frac{4}{21\sigma^2}\left(\sqrt{42}r_I - 3\right)$$

Summarizing:

$$L_{64,1}(r_I) \approx \begin{cases} \dfrac{4}{21\sigma^2}\left(\sqrt{42}r_I + 3\right) & r_I < -6/\sqrt{42} \\[2ex] \dfrac{1}{7\sigma^2}\left(\sqrt{42}r_I + 2\right) & -6/\sqrt{42} < r_I < -4/\sqrt{42} \\[2ex] \dfrac{2}{21\sigma^2}\left(\sqrt{42}r_I + 1\right) & -4/\sqrt{42} < r_I < -2/\sqrt{42} \\[2ex] \dfrac{\sqrt{42}}{21\sigma^2}r_I & -2/\sqrt{42} < r_I < 2/\sqrt{42} \\[2ex] \dfrac{2}{21\sigma^2}\left(\sqrt{42}r_I - 1\right) & 2/\sqrt{42} < r_I < 4/\sqrt{42} \\[2ex] \dfrac{1}{7\sigma^2}\left(\sqrt{42}r_I - 2\right) & 4/\sqrt{42} < r_I < 6/\sqrt{42} \\[2ex] \dfrac{4}{21\sigma^2}\left(\sqrt{42}r_I - 3\right) & 6/\sqrt{42} < r_I \end{cases}$$

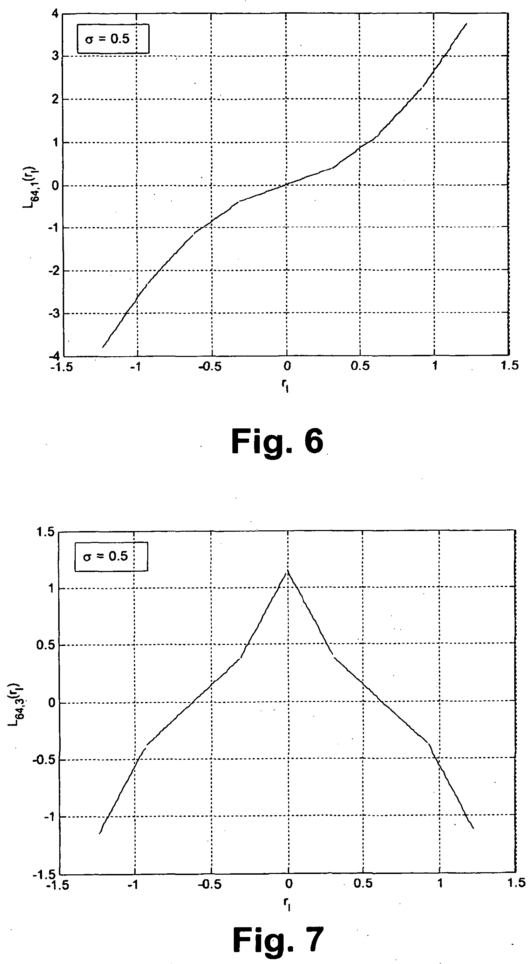

Fig. 6 shows a plot for this approximate LLR function for $\sigma = 0.5$. As can be gathered from Fig. 6 even more rough approximation can be performed by setting:

$$L_{64,1}(r_I) \approx \frac{\sqrt{42}}{21\sigma^2}r_I.$$

For $b_2$ the same is valid as for $b_1$ except that $y_Q$ should be considered instead of $y_I$ Hence the result can be derived similarly as:

$$L_{64,2}(r_Q) \approx \begin{cases} \dfrac{4}{21\sigma^2}\left(\sqrt{42}r_Q + 3\right) & r_Q < -6/\sqrt{42} \\[2ex] \dfrac{1}{7\sigma^2}\left(\sqrt{42}r_Q + 2\right) & -6/\sqrt{42} < r_Q < -4/\sqrt{42} \\[2ex] \dfrac{2}{21\sigma^2}\left(\sqrt{42}r_Q + 1\right) & -4/\sqrt{42} < r_Q < -2/\sqrt{42} \\[2ex] \dfrac{\sqrt{42}}{21\sigma^2}r_Q & -2/\sqrt{42} < r_Q < 2/\sqrt{42} \\[2ex] \dfrac{2}{21\sigma^2}\left(\sqrt{42}r_Q - 1\right) & 2/\sqrt{42} < r_Q < 4/\sqrt{42} \\[2ex] \dfrac{1}{7\sigma^2}\left(\sqrt{42}r_Q - 2\right) & 4/\sqrt{42} < r_Q < 6/\sqrt{42} \\[2ex] \dfrac{4}{21\sigma^2}\left(\sqrt{42}r_Q - 3\right) & 6/\sqrt{42} < r_Q \end{cases}$$

or with a more rough approximation:

$$L_{64,2}(r_Q) \approx \frac{\sqrt{42}}{21\sigma^2}r_Q.$$

Following the assumptions and from Fig. 5, it is clear that $y_1$ can have any of the following eight values $\pm 7/\sqrt{42}, \pm 5/\sqrt{42}, \pm 3/\sqrt{42}, \pm 1/\sqrt{42}$, depending on $b_3$. The probabilities P of these values depend on $b_3$ and are given in **Table 4.**

**Table 4**

| $y_1$ | $P(y_1\|b_3 = 0)$ | $P(y_1\|b_3 = 1)$ |
|---|---|---|
| $-7/\sqrt{42}$ | 0 | 0.25 |
| $-5/\sqrt{42}$ | 0 | 0.25 |
| $-3/\sqrt{42}$ | 0.25 | 0 |
| $-1/\sqrt{42}$ | 0.25 | 0 |
| $1/\sqrt{42}$ | 0.25 | 0 |
| $3/\sqrt{42}$ | 0.25 | 0 |
| $5/\sqrt{42}$ | 0 | 0.25 |
| $7/\sqrt{42}$ | 0 | 0.25 |

Then, starting with the LLR definition:

$$L_{64,3}(r_I) = \log \frac{\frac{1}{4}P\left(y_I = -\frac{3}{\sqrt{42}} \mid r_I\right) + \frac{1}{4}P\left(y_I = -\frac{1}{\sqrt{42}} \mid r_I\right) + \frac{1}{4}P\left(y_I = \frac{1}{\sqrt{42}} \mid r_I\right) + \frac{1}{4}P\left(y_I = \frac{3}{\sqrt{42}} \mid r_I\right)}{\frac{1}{4}P\left(y_I = -\frac{7}{\sqrt{42}} \mid r_I\right) + \frac{1}{4}P\left(y_I = -\frac{5}{\sqrt{42}} \mid r_I\right) + \frac{1}{4}P\left(y_I = \frac{5}{\sqrt{42}} \mid r_I\right) + \frac{1}{4}P\left(y_I = \frac{7}{\sqrt{42}} \mid r_I\right)}$$

under consideration of AWGN noise:

$$L_{64,3}(r_I) = \log \frac{\exp\left[-\frac{\left(r_I + \frac{3}{\sqrt{42}}\right)^2}{2\sigma^2}\right] + \exp\left[-\frac{\left(r_I + \frac{1}{\sqrt{42}}\right)^2}{2\sigma^2}\right] + \exp\left[-\frac{\left(r_I - \frac{1}{\sqrt{42}}\right)^2}{2\sigma^2}\right] + \exp\left[-\frac{\left(r_I - \frac{3}{\sqrt{42}}\right)^2}{2\sigma^2}\right]}{\exp\left[-\frac{\left(r_I + \frac{7}{\sqrt{42}}\right)^2}{2\sigma^2}\right] + \exp\left[-\frac{\left(r_I + \frac{5}{\sqrt{42}}\right)^2}{2\sigma^2}\right] + \exp\left[-\frac{\left(r_I - \frac{5}{\sqrt{42}}\right)^2}{2\sigma^2}\right] + \exp\left[-\frac{\left(r_I - \frac{7}{\sqrt{42}}\right)^2}{2\sigma^2}\right]}$$

One approach to simplify this calculation is to set the thresholds for $r_1$ at $\pm 6/\sqrt{42}, \pm 2/\sqrt{42}, 0$, so that the approximation of $L_{64,3}(r_1)$ can be obtained depending on the $r_1$ and the biggest exponential term in nominator and denominator.

If $r_I < -6/\sqrt{42}$ then:

$$L_{64,3}(r_I) \approx \log \frac{\exp\left[-\dfrac{\left(r_I + 3/\sqrt{42}\right)^2}{2\sigma^2}\right]}{\exp\left[-\dfrac{\left(r_I + 7/\sqrt{42}\right)^2}{2\sigma^2}\right]} = \frac{-\left(r_I + \dfrac{3}{\sqrt{42}}\right)^2 + \left(r_I + \dfrac{7}{\sqrt{42}}\right)^2}{2\sigma^2}$$

which can be further simplified to:

$$L_{64,3}(r_I) \approx \frac{2}{21\sigma^2}\left(\sqrt{42}r_I + 5\right).$$

If $-6/\sqrt{42} < r_I < -2/\sqrt{42}$ then:

$$L_{64,3}(r_I) \approx \log \frac{\exp\left[-\dfrac{\left(r_I + 3/\sqrt{42}\right)^2}{2\sigma^2}\right]}{\exp\left[-\dfrac{\left(r_I + 5/\sqrt{42}\right)^2}{2\sigma^2}\right]} = \frac{-\left(r_I + \dfrac{3}{\sqrt{42}}\right)^2 + \left(r_I + \dfrac{5}{\sqrt{42}}\right)^2}{2\sigma^2}$$

which can be further simplified to:

$$L_{64,3}(r_I) \approx \frac{1}{21\sigma^2}\left(\sqrt{42}r_I + 4\right).$$

If $-2/\sqrt{42} < r_I < 0$ then:

$$L_{64,3}(r_I) \approx \log \frac{\exp\left[-\dfrac{\left(r_I + 1/\sqrt{42}\right)^2}{2\sigma^2}\right]}{\exp\left[-\dfrac{\left(r_I + 5/\sqrt{42}\right)^2}{2\sigma^2}\right]} = \frac{-\left(r_I + \dfrac{1}{\sqrt{42}}\right)^2 + \left(r_I + \dfrac{5}{\sqrt{42}}\right)^2}{2\sigma^2}$$

which can be further simplified to:

$$L_{64,3}(r_I) \approx \frac{2}{21\sigma^2}\left(\sqrt{42}r_I + 3\right)$$

If $0 < r_I < 2/\sqrt{42}$ then:

$$L_{64,3}(r_l) \approx \frac{-\left(r_l - \frac{1}{\sqrt{42}}\right)^2 + \left(r_l - \frac{5}{\sqrt{42}}\right)^2}{2\sigma^2}$$

which can be further simplified to:

$$L_{64,3}(r_l) \approx \frac{2}{21\sigma^2}\left(-\sqrt{42}r_l + 3\right).$$

If $2/\sqrt{42} < r_l < 6/\sqrt{42}$ then:

$$L_{64,3}(r_l) \approx \frac{-\left(r_l - \frac{3}{\sqrt{42}}\right)^2 + \left(r_l - \frac{5}{\sqrt{42}}\right)^2}{2\sigma^2}$$

which can be further simplified to:

$$L_{64,3}(r_l) \approx \frac{1}{21\sigma^2}\left(-\sqrt{42}r_l + 4\right)$$

If $6/\sqrt{42} < r_l$ then:

$$L_{64,3}(r_l) \approx \frac{-\left(r_l - \frac{3}{\sqrt{42}}\right)^2 + \left(r_l - \frac{7}{\sqrt{42}}\right)^2}{2\sigma^2}$$

which can be further simplified to:

$$L_{64,3}(r_l) \approx \frac{2}{21\sigma^2}\left(-\sqrt{42}r_l + 5\right)$$

Summarizing:

$$L_{64,3}(r_I) \approx \begin{cases} \dfrac{2}{21\sigma^2}\left(\sqrt{42}r_I + 5\right) & r_I < -6/\sqrt{42} \\[2mm] \dfrac{1}{21\sigma^2}\left(\sqrt{42}r_I + 4\right) & -6/\sqrt{42} < r_I < -2/\sqrt{42} \\[2mm] \dfrac{2}{21\sigma^2}\left(\sqrt{42}r_I + 3\right) & -2/\sqrt{42} < r_I < 0 \\[2mm] \dfrac{2}{21\sigma^2}\left(-\sqrt{42}r_I + 3\right) & 0 < r_I < 2/\sqrt{42} \\[2mm] \dfrac{1}{21\sigma^2}\left(-\sqrt{42}r_I + 4\right) & 2/\sqrt{42} < r_I < 6/\sqrt{42} \\[2mm] \dfrac{2}{21\sigma^2}\left(-\sqrt{42}r_I + 5\right) & 6/\sqrt{42} < r_I \end{cases}$$

.

Fig. 7 shows a plot for this approximate LLR function for σ = 0.5. As can be gathered from Fig. 7, an even more rough approximation can be performed by setting:

$$L_{64,3}(r_I) \approx \frac{1}{21\sigma^2}\left(-\sqrt{42}|r_I| + 4\right)$$

.

It is noted that the approximate function corresponds to the lover scope function. Hence, smaller LLR values are better approximated. These values have most impact on the system BLER performance.

For $b_4$ the same is valid as for $b_3$ except that $y_Q$ should be considered instead of $y_1$. Hence, similarly, the result can be derived as:

$$L_{64,4}(r_Q) \approx \frac{1}{21\sigma^2}\left(-\sqrt{42}|r_Q| + 4\right)$$

.

Following the assumptions and Fig. 5, it is clear that $y_1$ can have any of the following eight values $\pm 7/\sqrt{42}, \pm 5/\sqrt{42}, \pm 3/\sqrt{42}, \pm 1/\sqrt{42}$, depending on $b_5$. The probabilities P of these values depend on $b_5$ and are given in **Table 5.**

**Table 5**

| $y_1$ | $P(y_1|b_5 = 0)$ | $P(y_1|b_5 = 1)$ |
|---|---|---|
| $-7/\sqrt{42}$ | 0 | 0.25 |
| $-5/\sqrt{42}$ | 0.25 | 0 |
| $-3/\sqrt{42}$ | 0.25 | 0 |
| $-1/\sqrt{42}$ | 0 | 0.25 |
| $1/\sqrt{42}$ | 0 | 0.25 |
| $3/\sqrt{42}$ | 0.25 | 0 |
| $5/\sqrt{42}$ | 0.25 | 0 |

(continued)

| $y_1$ | $P(y_1\|b_5 = 0)$ | $P(y_1\|b_5 = 1)$ |
|---|---|---|
| $7/\sqrt{42}$ | 0 | 0.25 |

Starting with the LLR definition:

$$L_{64,5}(r_I) = \log \frac{\frac{1}{4}P\left(y_I = -\frac{5}{\sqrt{42}} \mid r_I\right) + \frac{1}{4}P\left(y_I = -\frac{3}{\sqrt{42}} \mid r_I\right) + \frac{1}{4}P\left(y_I = \frac{3}{\sqrt{42}} \mid r_I\right) + \frac{1}{4}P\left(y_I = \frac{5}{\sqrt{42}} \mid r_I\right)}{\frac{1}{4}P\left(y_I = -\frac{7}{\sqrt{42}} \mid r_I\right) + \frac{1}{4}P\left(y_I = -\frac{1}{\sqrt{42}} \mid r_I\right) + \frac{1}{4}P\left(y_I = \frac{1}{\sqrt{42}} \mid r_I\right) + \frac{1}{4}P\left(y_I = \frac{7}{\sqrt{42}} \mid r_I\right)}$$

under consideration of AWGN noise:

$$L_{64,5}(r_I) = \log \frac{\exp\left[-\frac{\left(r_I + \frac{5}{\sqrt{42}}\right)^2}{2\sigma^2}\right] + \exp\left[-\frac{\left(r_I + \frac{3}{\sqrt{42}}\right)^2}{2\sigma^2}\right] + \exp\left[-\frac{\left(r_I - \frac{3}{\sqrt{42}}\right)^2}{2\sigma^2}\right] + \exp\left[-\frac{\left(r_I - \frac{5}{\sqrt{42}}\right)^2}{2\sigma^2}\right]}{\exp\left[-\frac{\left(r_I + \frac{7}{\sqrt{42}}\right)^2}{2\sigma^2}\right] + \exp\left[-\frac{\left(r_I + \frac{1}{\sqrt{42}}\right)^2}{2\sigma^2}\right] + \exp\left[-\frac{\left(r_I - \frac{1}{\sqrt{42}}\right)^2}{2\sigma^2}\right] + \exp\left[-\frac{\left(r_I - \frac{7}{\sqrt{42}}\right)^2}{2\sigma^2}\right]}$$

One approach to simplify this calculation is to set the thresholds for $r_1$ at $\pm 4/\sqrt{42}, 0,$ so that the approximation of $L_{64,5}(r_1)$ can be obtained depending on the $r_1$ and the biggest exponential term in nominator and denominator.

If $r_I < -4/\sqrt{42}$ then:

$$L_{64,5}(r_I) \approx \log \frac{\exp\left[-\frac{\left(r_I + 5/\sqrt{42}\right)^2}{2\sigma^2}\right]}{\exp\left[-\frac{\left(r_I + 7/\sqrt{42}\right)^2}{2\sigma^2}\right]} = \frac{-\left(r_I + \frac{5}{\sqrt{42}}\right)^2 + \left(r_I + \frac{7}{\sqrt{42}}\right)^2}{2\sigma^2}.$$

which can be further simplified to:

$$L_{64,5}(r_I) \approx \frac{1}{21\sigma^2}\left(\sqrt{42}r_I + 6\right)$$

If $-4/\sqrt{42} < r_I < 0$ then:

$$L_{64,S}(r_I) \approx \frac{-\left(r_I + \frac{3}{\sqrt{42}}\right)^2 + \left(r_I + \frac{1}{\sqrt{42}}\right)^2}{2\sigma^2}$$

which can be further simplified to:

$$L_{64,S}(r_I) \approx \frac{1}{21\sigma^2}\left(-\sqrt{42}r_I - 2\right)$$

If $0 < r_I < 4/\sqrt{42}$ then:

$$L_{64,S}(r_I) \approx \frac{-\left(r_I - \frac{3}{\sqrt{42}}\right)^2 + \left(r_I - \frac{1}{\sqrt{42}}\right)^2}{2\sigma^2}$$

which can be further simplified to:

$$L_{64,S}(r_I) \approx \frac{1}{21\sigma^2}\left(\sqrt{42}r_I - 2\right)$$

If $4/\sqrt{42} < r_I$ then:

$$L_{64,S}(r_I) \approx \frac{-\left(r_I - \frac{5}{\sqrt{42}}\right)^2 + \left(r_I - \frac{7}{\sqrt{42}}\right)^2}{2\sigma^2}$$

which can be further simplified to:

$$L_{64,S}(r_I) \approx \frac{1}{21\sigma^2}\left(-\sqrt{42}r_I + 6\right)$$

Summarizing:

$$L_{64,S}(r_I) \approx \begin{cases} \frac{1}{21\sigma^2}\left(\sqrt{42}r_I + 6\right) & r_I < -4/\sqrt{42} \\[2mm] \frac{1}{21\sigma^2}\left(-\sqrt{42}r_I - 2\right) & -4/\sqrt{42} < r_I < 0 \\[2mm] \frac{1}{21\sigma^2}\left(\sqrt{42}r_I - 2\right) & 0 < r_I < 4/\sqrt{42} \\[2mm] \frac{1}{21\sigma^2}\left(-\sqrt{42}r_I + 6\right) & 4/\sqrt{42} < r_I \end{cases}$$

Further simplification gives:

$$L_{64,5}(r_I) \approx -\frac{1}{21\sigma^2}\left(\left|\sqrt{42}\left|r_I\right| - 4\right| - 2\right)$$

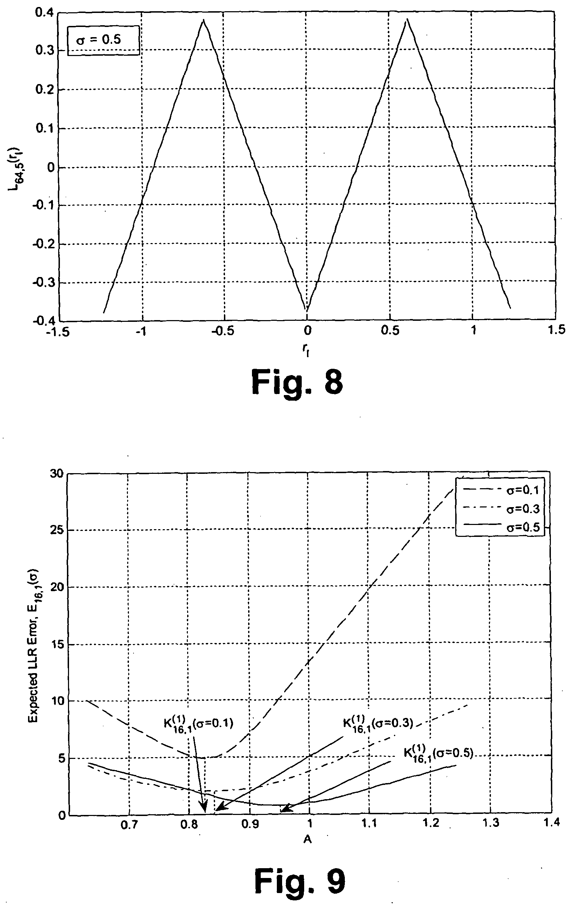

Fig. 8 shows a plot for this approximate LLR function for $\sigma = 0.5$.

For $b_6$ the same is valid as for $b_5$ except that $y_Q$ should be considered instead of $y_1$. Hence, similarly, the result can be derived as:

$$L_{64,6}(r_Q) \approx -\frac{1}{21\sigma^2}\left(\left|\sqrt{42}\left|r_Q\right| - 4\right| - 2\right).$$

The proposed LLR approximation according to the embodiments is optimal piecewise linear. The approximations for LLR are derived for 16QAM and 64QAM constellations and the form of the equation depends on the bit order for which LLR is calculated. 16QAM and 64QAM symbols are modulated at the transmitter using 4 and 6 source bits, respectively. The LLR equations corresponding to real and imaginary bit pairs have the same form, for e.g. 64QAM; bit pairs {1,2}, {3,4}, and {5,6} have the same LLR equations, except that one LLR expression is using the real and the other LLR expression is using the imaginary part of received sample at the receiver. Hence, for simplicity only LLR's for bits 1, 3, and 5 are considered in the following description, and the extension to the bits 2, 4, and 6 is straight forward by using the corresponding equation and replacing the real component with the imaginary component of the received symbol. In this case, the proposed LLR approximations can be summarized as follows:

For 16QAM:

$$\hat{L}_{16,1}(r_I,\sigma) = \frac{K_{16,1}^{(1)}(\sigma)}{\sigma^2} r_I \qquad (1)$$

$$\hat{L}_{16,3}(r_I,\sigma) = \frac{K_{16,3}^{(1)}(\sigma)}{\sigma^2}\left[\left|r_I\right| - K_{16,3}^{(2)}(\sigma)\right] \qquad (2)$$

for 64QAM:

$$\hat{L}_{64,1}(r_I,\sigma) = \frac{K_{64,1}^{(1)}(\sigma)}{\sigma^2} r_I \qquad (3)$$

$$\hat{L}_{64,3}(r_I,\sigma) = \frac{K_{64,3}^{(1)}(\sigma)}{\sigma^2}\left[\left|r_I\right| - K_{64,3}^{(2)}(\sigma)\right] \qquad (4)$$

$$\hat{L}_{64,5}(r_I,\sigma) = \frac{K_{64,5}^{(1)}(\sigma)}{\sigma^2}\left[\left|\left|r_I\right| - K_{64,5}^{(2)}(\sigma)\right| - K_{64,5}^{(3)}(\sigma)\right] \qquad (5)$$

Here, the channel noise power represented by $\sigma^2$ and $\hat{L}_{i,j}(r_1,\sigma)$ is the approximated LLR for constellation type $i$ and modulation bit index j.

According to the embodiments, the LLR coefficients in these equations shown by $K_{i,j}^{(k)}(\sigma)$ is dependent to the parameter $\sigma$ where i,j, and $k$ represent constellation, constellation bit index, and the LLR coefficient index, respectively.

The following approach is applied for obtaining the optimal values of the LLR coefficients based on different $\sigma$'s. The following two axioms provide the basis for the calculation of the optimal values of the LLR coefficients $K_{i,j}^{(k)}(\sigma)$:

**Axiom-1:** The approximate LLR function shall have the same sign as the exact LLR functions for any given $\sigma$ and $r_1$ value that can be expressed as:

$$sign\big(L_{i,j}(r_I,\sigma)\big) = sign\big(\hat{L}_{i,j}(r_I,\sigma)\big) \qquad (6)$$

**Axiom-2:** The optimal values of the LLR coefficients $K_{i,j}^{(k)}(\sigma)$ are minimizing the expected LLR error between exact LLR and optimal piecewise linear LLR approximation that can be expressed as:

$$E[\epsilon] = \int_{r_I \in R} p_i(r_I,\sigma)\epsilon_{i,j}(r_I,\sigma)\, dr_I \qquad (7)$$

where $p_i(r_I,\sigma)$ is the probability density function for the real part of the received sample $r_I = \Re(r)$ and integration is over all possible values of $r_1$ shown as range $R$, and the error $\epsilon_{i,j}(r_1,\sigma)$ corresponds to the absolute value of the difference between exact LLR $L_{i,j}(r_1,\sigma)$ and approximate LLR $\hat{L}_{i,j}(r_1,\sigma)$ functions that can be expressed as:

$$\epsilon_{i,j}(r_I,\sigma) = \big|L_{i,j}(r_I,\sigma) - \hat{L}_{i,j}(r_I,\sigma)\big|. \qquad (8)$$

The coefficients $K_{i,j}^{(k)}(\sigma)$ for $k > 1$ are derived from Axiom-1 and afterwards the coefficient $K_{i,j}^{(k)}(\sigma)$ for $k = 1$ is derived from Axiom-2 using the numerical integration of equation (7) and searching for the optimal value of the LLR coefficient $K_{i,j}^{(1)}(\sigma)$ for specific $\sigma$ value.

With an example system model for BLER performance evaluation, it has been shown that the proposed optimal piecewise linear LLR approximation provides a block error rate (BLER) performance very close to exact LLR and much better performance than the non-optimal piecewise linear approximation described in Tosato and Bisaglia (2002) and Pyndiah et al. (1995). The proposed method provides increased BLER performance - closer than 0.1$dB$ to the exact LLR performance. The simulations using example system model showed gains of 0.1$dB$ and 0.5$dB$ compared to the non-optimal piecewise linear approximation (Tosato and Bisaglia, 2002; Pyndiah et al., 1995) for 16QAM and 64QAM constellations, respectively.

The LLR calculation equations of the proposed optimal approximation have almost the same computational complexity as the non-optimal piecewise linear LLR approximation (Tosato and Bisaglia, 2002; Pyndiah et al., 1995). The additional complexity comes from the need for $\sigma$ dependent optimal value look-ups for LLR coefficients $K_{i,j}^{(k)}(\sigma)$.

According to the embodiments, the optimal values for the LLR coefficients have been derived for reasonable range of $\sigma$ values and it has been noticed that these LLR coefficients change very little and smoothly with $\sigma$. Hence, in practical applications small look-up tables are enough for each $K_{i,j}^{(k)}(\sigma)$ LLR coefficient. As an example, lookup tables with 20 elements each can be used. Additional architecture dependent optimization can be applied to minimize the lookup table overhead, so the increase in computational complexity due to the lookups is negligible.

Furthermore, according to the embodiments, the exact LLR curve is approximated with an optimal piecewise linear function, giving priority to the sign of the LLR, so that the exact LLR and the proposed LLR approximation have the same sign. The error between the exact LLR curve and its approximation has been considered by assuming a Gaussian distribution of the received symbols. Based on these noise statistics, the LLR error is minimized at the points where LLR is calculated most. The proposed approximation improves the performance of LLR computation (e.g. in the demodulator) while preserving the piecewise linear function, so that complexity is suitable for practical communications systems. There are other methods in the literature describing the exact LLR calculation and proposing an approximate LLR calculation. However, none of the proposed piecewise linear LLR approximation methods considers the optimization criterion given with the Axioms 1 and 2.

In the following, embodiments of the proposed approximation for 16QAM and 64QAM constellations are described.

The optimal piecewise linear LLR calculation according to the embodiments depends on the constellation and is carried out by assuming that the bits entering to the modulator input are equiprobable and uncorrelated. The optimal LLR calculation for each bit of the constellation has a different expression usually containing non-linear logarithmic and exponential terms.

The LLR calculation for a QPSK constellation reduces to the form that corresponds to an optimal linear LLR equation. Hence, the proposed LLR approximation only leads to a difference when applied to higher order modulations like 16QAM, 64QAM, 256QAM, etc.

According to the embodiments, approximation of the LLR is improved by considering that $r_1$ has some values with high probability and other values with less probability. The received sample $r_1$ or $r_Q$ have a probability density functions (pdf) $p_i(r_1)$ or $p_i(r_Q)$ respectively. Here, $i$ represent the constellation. For specific constellations like 16QAM and 64QAM with Gray mapping and AWGN with $\sigma$, $p_i(r_1)$ is Gaussian distribution based. It can be found out by summing up the pdfs for all possible constellation symbols. For 16QAM it is represented by $p_{16}(r_1, \sigma)$ and for 64QAM by $p_{64}(r_1, \sigma)$.

The proposed optimal piecewise linear LLR approximation targets the minimization of the expected LLR error defined as:

$$E\left[\varepsilon_{i,j}(r_I, \sigma)\right] = \int_{r_I \in R} p_i(r_I, \sigma)\varepsilon_{i,j}(r_I, \sigma)dr_I$$

where, $\epsilon_{i,j}(r_1, \sigma)$ is the error between the exact LLR and the approximate LLR, and is defined by:

$$\epsilon_{i,j}(r_I, \sigma) = \left|L_{i,j}(r_I, \sigma) - \hat{L}_{i,j}(r_I, \sigma)\right|$$

and $R$ is the range of possible $r_1$ values. For simplicity, the expected range of the real or imaginary component values of the received samples can be limited. For: e.g. for 16QAM constellation the limitation can be:

$$r_I, r_Q \in \left(-\frac{3}{\sqrt{10}} - 3\sigma, \frac{3}{\sqrt{10}} + 3\sigma\right)$$

since the transmitted value is either $\pm 1/\sqrt{10}$ or $\pm 3/\sqrt{10}$ and 99% of the received samples for $r_1$ and $r_Q$ are inside the $3\sigma$ region. Hence it can be safely assumed that $r_1, r_Q \in R$ where:

$$R = \left(-\frac{3}{\sqrt{10}} - 3\sigma, \frac{3}{\sqrt{10}} + 3\sigma\right).$$

It is important to consider that, for MIMO applications, $\sigma$ depends on post-processing SNR, and for OFDM applications $\sigma$ is subcarrier dependent. Since, the expected LLR error depends on $\sigma$, $E_{i,j}(\sigma)$ is used instead of $E[\epsilon_{i,j}(r_1, \sigma)]$.

The exact LLR formula depends on the constellation and the constellation bit index. Hence, all optimizations has to be performed for 16QAM and 64QAM constellations separately and also for two different bit indices of 16QAM, i.e. $j \in \{1,3\}$, and three different bit indices of 64QAM, i.e. $j \in \{1,3,5\}$. Hence, in total five different functions. The details of these are given in the following text.

As already mentioned, since for QPSK the linear approach is exact, the proposed method does not change the exact LLR expressions. The proposed approximation provides advantage in case of higher order constellations like 16QAM and 64QAM.

In the following first embodiment, LLR approximation for 16QAM is described.

For bit-1 of 16QAM the exact LLR value is:

$$L_{16,1}(r_I) = \log \frac{\exp\left[-\frac{\left(r_I - 1/\sqrt{10}\right)^2}{2\sigma^2}\right] + \exp\left[-\frac{\left(r_I - 3/\sqrt{10}\right)^2}{2\sigma^2}\right]}{\exp\left[-\frac{\left(r_I + 1/\sqrt{10}\right)^2}{2\sigma^2}\right] + \exp\left[-\frac{\left(r_I + 3/\sqrt{10}\right)^2}{2\sigma^2}\right]},$$

and the reference approximate LLR is:

$$L_{16,1}(r_I) \approx \frac{\sqrt{10}}{5\sigma^2} r_I. \qquad (9)$$

The question is to find the LLR coefficient A so that the term:

$$\hat{L}_{16,1}(r_I) = \frac{A}{\sigma^2} r_I$$

approximates the exact LLR values in a better way. Assuming the LLR error is defined as:

$$\varepsilon_{16,1}(r_I, \sigma) = \left| L_{16,1}(r_I) - \hat{L}_{16,1}(r_I) \right|.$$

Then, the $K_{16,1}^{(1)}(\sigma)$ can be expressed as:

$$K_{16,1}^{(1)}(\sigma) = \arg\min_A \int_{r_I \in R} p_{16}(r_I, \sigma) \cdot \varepsilon_{16,1}(r_I, \sigma) \cdot dr_I.$$

For bit-1 of 16QAM the $K_{16,1}^{(1)}(\sigma)$ can be extended and written as follows:

$$K_{16,1}^{(1)}(\sigma) = \arg\min_A \int_{r_I \in R} p_{16,1}(r_I, \sigma) \cdot \left| \log \frac{\exp\left[-\frac{\left(r_I - \frac{1}{\sqrt{10}}\right)^2}{2\sigma^2}\right] + \exp\left[-\frac{\left(r_I - \frac{3}{\sqrt{10}}\right)^2}{2\sigma^2}\right]}{\exp\left[-\frac{\left(r_I + \frac{1}{\sqrt{10}}\right)^2}{2\sigma^2}\right] + \exp\left[-\frac{\left(r_I + \frac{3}{\sqrt{10}}\right)^2}{2\sigma^2}\right]} - \frac{A}{\sigma^2} r_I \right| \cdot dr_I,$$

where:

$$R = \left( -\frac{3}{\sqrt{10}} - 3\sigma, \frac{3}{\sqrt{10}} + 3\sigma \right),$$

and where:

$$p_{16}(r_I, \sigma) = \exp\left[-\frac{\left(r_I - \frac{1}{\sqrt{10}}\right)^2}{2\sigma^2}\right] + \exp\left[-\frac{\left(r_I - \frac{3}{\sqrt{10}}\right)^2}{2\sigma^2}\right] + \exp\left[-\frac{\left(r_I + \frac{1}{\sqrt{10}}\right)^2}{2\sigma^2}\right] + \exp\left[-\frac{\left(r_I + \frac{3}{\sqrt{10}}\right)^2}{2\sigma^2}\right].$$

The numerical values of $K_{16,1}^{(1)}(\sigma)$ can be figured out using numerical integration and scanning over possible range of A values from $\sqrt{10}/5$ to $2\sqrt{10}/5$.

Fig. 9 shows plots of the expected LLR error $E_{16,1}(\sigma)$ for $\sigma$ ranging from 0.1 to 0.5 depending on the first LLR coefficient A.

As can be gathered from Fig. 9, the optimal value of the LLR coefficient A minimizing the expected LLR error $E_{16,1}(\sigma)$ depends on $\sigma$ and is denoted by $K_{16,1}^{(1)}(\sigma)$.

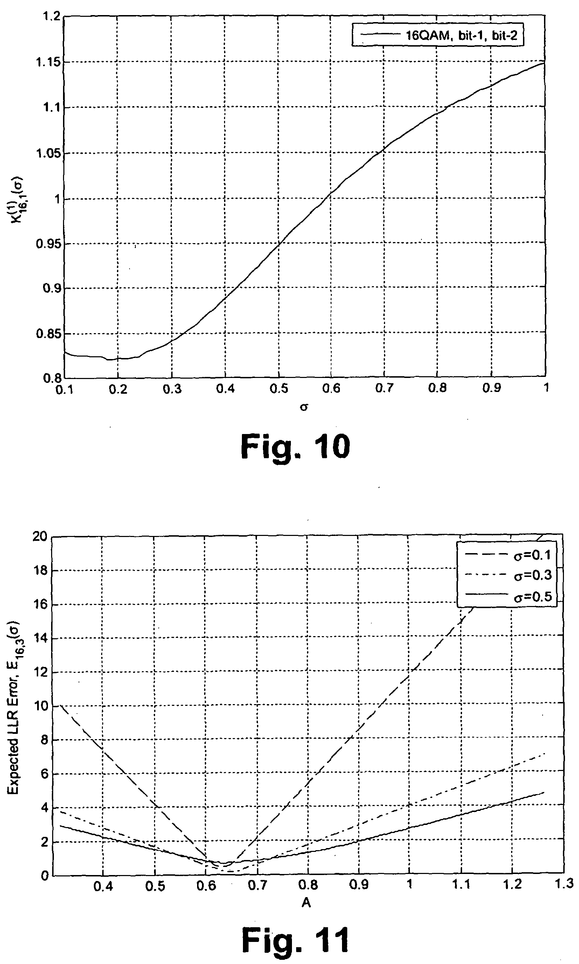

Fig. 10 shows a plot of the optimal values of the first LLR coefficient $K_{16,1}^{(1)}(\sigma)$ depending on $\sigma$ for bit-1 or bit-2 of 16QAM - these values can be stored in a lookup table in the receiver for the proposed optimal piecewise linear LLR approximation. As an alternative, instead of the lookup table, depending on the implementation, a polynomial approximation function can be used for finding the optimal value of the LLR coefficient $K_{16,1}^{(1)}(\sigma)$ at the receiver. The LLR coefficients can be very closely approximated by 3rd or 4th degree polynomials.

For bit-3 of 16QAM the LLR can be approximated as follows:

$$\hat{L}_{16,3}(r_I) = -\frac{A}{\sigma^2}|r_I| + \frac{B}{\sigma^2} \qquad\qquad (10)$$

wherein the points where $L_{16,3}(r_I)$ becomes 0 can be calculated from the exact LLR expression:

$$\log \frac{\exp\left[-\frac{\left(r_I + 1/\sqrt{10}\right)^2}{2\sigma^2}\right] + \exp\left[-\frac{\left(r_I - 1/\sqrt{10}\right)^2}{2\sigma^2}\right]}{\exp\left[-\frac{\left(r_I + 3/\sqrt{10}\right)^2}{2\sigma^2}\right] + \exp\left[-\frac{\left(r_I - 3/\sqrt{10}\right)^2}{2\sigma^2}\right]} = 0$$

The calculation can be done for $r_1 > 0$ and an additional solution is $-r_1$. The solution is denoted by the second LLR coefficient $K_{16,3}^{(2)}(\sigma)$. In this case, to have the same sign of exact LLR and proposed approximate LLR functions, the following shall apply:

$$-\frac{A}{\sigma^2}K_{16,3}^{(2)}(\sigma) + \frac{B}{\sigma^2} = 0.$$

Then, the ratio can be defined as follows:

$$\frac{B}{A} = K_{16,3}^{(2)}(\sigma)$$

Then, the approximation can be written using the optimal value of the LLR coefficient A:

$$\hat{L}_{16,3}(r_I) = -\frac{A}{\sigma^2}|r_I| + \frac{AK_{16,3}^{(2)}(\sigma)}{\sigma^2}$$

or:

$$\hat{L}_{16,3}(r_I) = -\frac{A}{\sigma^2}\left[|r_I| - K_{16,3}^{(2)}(\sigma)\right]$$

using $A = K^{(1)}_{16,3}(\sigma)$

$$\hat{L}_{16,3}(r_I) = -\frac{K^{(1)}_{16,3}(\sigma)}{\sigma^2}\left[|r_I| - K^{(2)}_{16,3}(\sigma)\right].$$

Here, $K^{(1)}_{16,3}(\sigma)$ can be calculated from:

$$K^{(1)}_{16,3}(\sigma) = \arg\min_{A} \int_{r_I \in R} p_{16}(r_I,\sigma) \cdot \left| \log\frac{\exp\left[-\frac{(r_I+1/\sqrt{10})^2}{2\sigma^2}\right] + \exp\left[-\frac{(r_I-1/\sqrt{10})^2}{2\sigma^2}\right]}{\exp\left[-\frac{(r_I+3/\sqrt{10})^2}{2\sigma^2}\right] + \exp\left[-\frac{(r_I-3/\sqrt{10})^2}{2\sigma^2}\right]} + \frac{A}{\sigma^2}\left[|r_I| - K^{(2)}_{16,3}(\sigma)\right] \right| \cdot dr_I$$

for the range $R = \left(-\frac{3}{\sqrt{10}} - 3\sigma, \frac{3}{\sqrt{10}} + 3\sigma\right)$ and

$$p_{16}(r_I,\sigma) = \exp\left[-\frac{\left(r_I - \frac{1}{\sqrt{10}}\right)^2}{2\sigma^2}\right] + \exp\left[-\frac{\left(r_I - \frac{3}{\sqrt{10}}\right)^2}{2\sigma^2}\right] + \exp\left[-\frac{\left(r_I + \frac{1}{\sqrt{10}}\right)^2}{2\sigma^2}\right] + \exp\left[-\frac{\left(r_I + \frac{3}{\sqrt{10}}\right)^2}{2\sigma^2}\right]$$

the numerical values of $K^{(1)}_{16,3}(\sigma)$ can be derived considering the range of the LLR coefficient A from $\sqrt{10}/10$ to $2\sqrt{10}/5$.

Fig. 11 shows plots of the expected LLR error $E_{16,3}(\sigma)$ depending on the first LLR coefficient $A$ for bit-3 or bit-4 of 16QAM, where the values of $\sigma$ are taken as 0.1, 0.3, and 0.5.

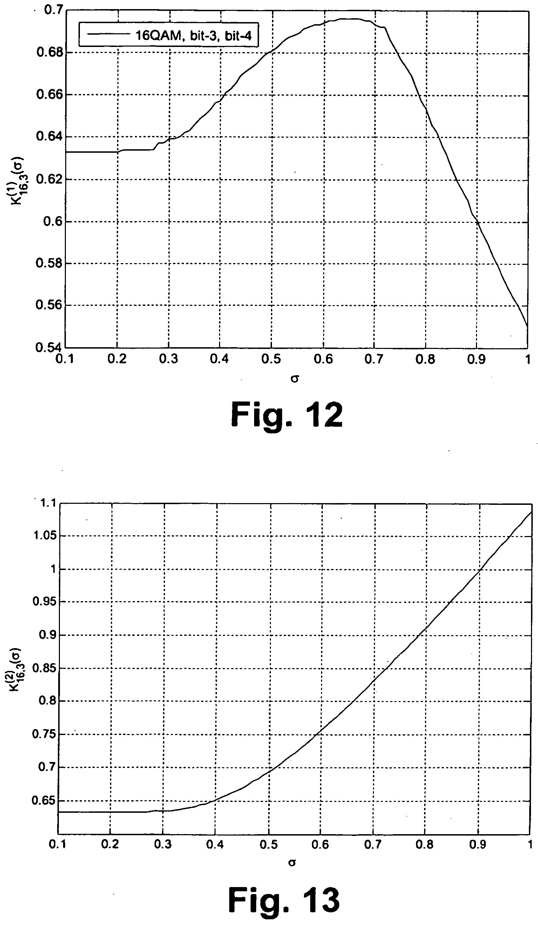

Fig. 12 shows a plot of the optimal values of the first LLR coefficient for the proposed LLR approximation depending on $\sigma$ for bit-3 or bit-4 of 16QAM.

Fig. 13 shows a plot of the optimal values of the second LLR coefficient $K^{(2)}_{16,3}(\sigma)$ used for proposed LLR calculation depending on $\sigma$ for bit-3 or bit-4 of 16QAM.

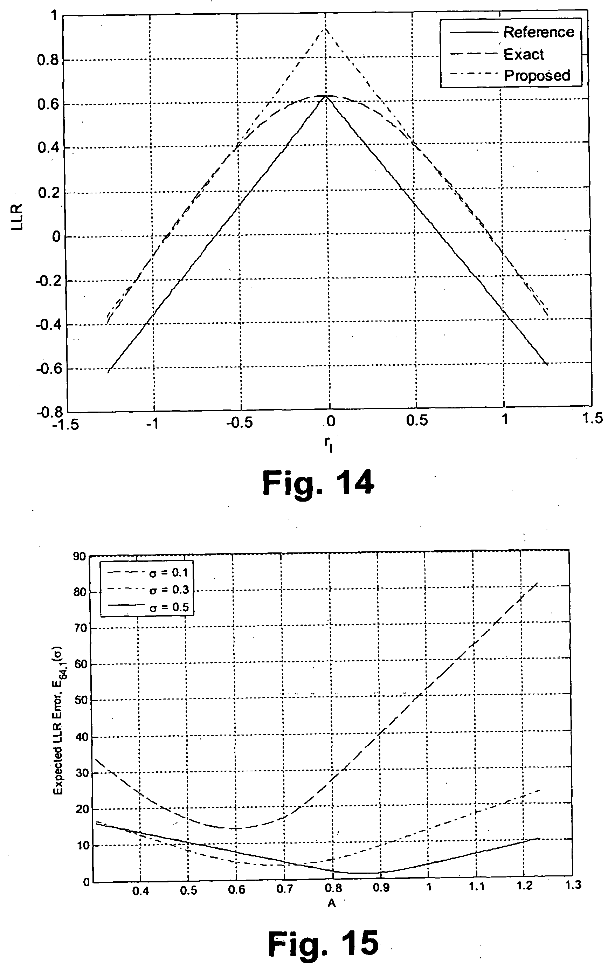

Fig. 14 shows a plot of the LLR's calculated from the real or imaginary part of 16QAM received sample for bit-3 or bit-4 by using the exact calculation, reference and proposed approximation for $\sigma = 0.4$. As can be gathered from Fig. 14, the proposed LLR approximation is much better than the reference and is much closer to the exact LLR curve.

In the following second embodiment, LLR approximation for 64QAM is described.

For bit-1 of 64QAM, $K^{(1)}_{64,1}(\sigma)$ can be written as follows:

$$K^{(1)}_{64,1}(\sigma) = \arg\min_{A} \int_{r_I \in R} p_{64}(r_I,\sigma) \cdot \left| L_{64,1}(r_I,\sigma) - \frac{A}{\sigma^2}r_I \right| \cdot dr_I.$$

where:

$$R = \left(-\frac{7}{\sqrt{42}} - 3\sigma, \frac{7}{\sqrt{42}} + 3\sigma\right),$$

$$p_{64}(r_I,\sigma) = \sum_{p_I \in \left\{\pm\frac{1}{\sqrt{42}},\pm\frac{3}{\sqrt{42}},\pm\frac{5}{\sqrt{42}},\pm\frac{7}{\sqrt{42}}\right\}} \exp\left[-\frac{(r_I-p_I)^2}{2\sigma^2}\right],$$

and where:

$$L_{64,1}(r_I,\sigma) = \log \frac{\exp\left[-\frac{\left(r_I-\frac{1}{\sqrt{42}}\right)^2}{2\sigma^2}\right] + \exp\left[-\frac{\left(r_I-\frac{3}{\sqrt{42}}\right)^2}{2\sigma^2}\right] + \exp\left[-\frac{\left(r_I-\frac{5}{\sqrt{42}}\right)^2}{2\sigma^2}\right] + \exp\left[-\frac{\left(r_I-\frac{7}{\sqrt{42}}\right)^2}{2\sigma^2}\right]}{\exp\left[-\frac{\left(r_I+\frac{1}{\sqrt{42}}\right)^2}{2\sigma^2}\right] + \exp\left[-\frac{\left(r_I+\frac{3}{\sqrt{42}}\right)^2}{2\sigma^2}\right] + \exp\left[-\frac{\left(r_I+\frac{5}{\sqrt{42}}\right)^2}{2\sigma^2}\right] + \exp\left[-\frac{\left(r_I+\frac{7}{\sqrt{42}}\right)^2}{2\sigma^2}\right]},$$

The range for the LLR coefficient $A$ can be from $\sqrt{42}/21$ to $4\sqrt{42}/21$, and the values of σ are taken from 0.1 to 1.

Fig. 15 shows a plot of the expected LLR error depending on the first LLR coefficient $A$ for bit-1 or bit-2 of 64QAM. As can be gathered from Fig. 15, the optimal values of the LLR coefficient $K_{64,1}^{(1)}(\sigma)$, providing minimal expected LLR error, shifts with the value of σ.

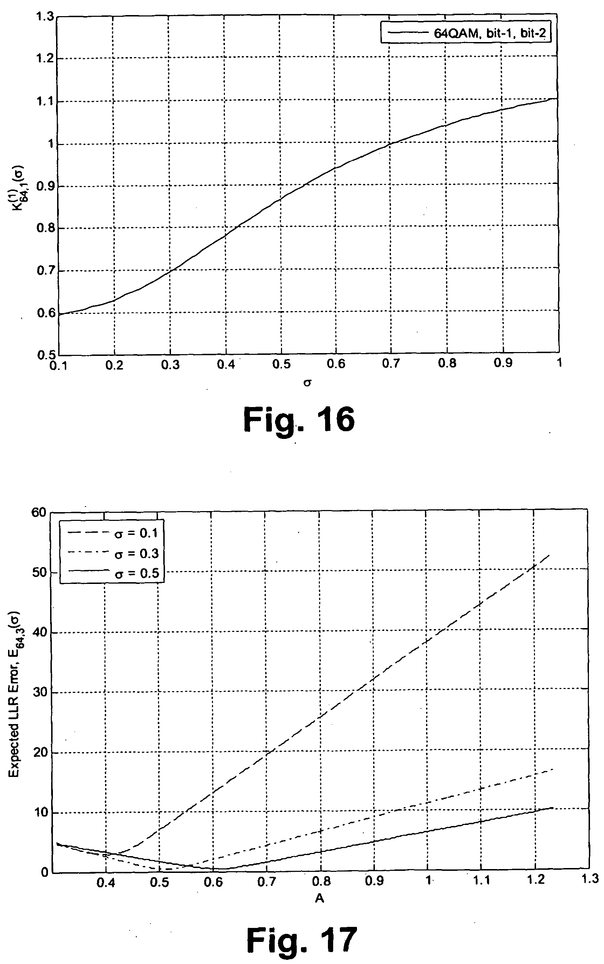

Fig. 16 shows a plot of the optimal values of the first LLR coefficient $K_{64,1}^{(1)}(\sigma)$ for the proposed LLR approximation depending on σ for bit-1 or bit-2 of 64QAM. These values may be stored in a lookup table and used by the proposed LLR approximation.

For bit-3 of 64QAM $K_{64,3}^{(1)}(\sigma)$ can be written as follows:

$$K_{64,3}^{(1)}(\sigma) = \arg\min_A \int_{r_I \in R} p_{64}(r_I,\sigma) \cdot \left| L_{64,3}(r_I,\sigma) + \frac{A}{\sigma^2}\left[|r_I| - K_{64,3}^{(2)}(\sigma)\right]\right| \cdot dr_I.$$

where:

$$R = \left(-\frac{7}{\sqrt{42}} - 3\sigma, \frac{7}{\sqrt{42}} + 3\sigma\right),$$

$$p_{64}(r_I,\sigma) = \sum_{p_I \in \left\{\pm\frac{1}{\sqrt{42}},\pm\frac{3}{\sqrt{42}},\pm\frac{5}{\sqrt{42}},\pm\frac{7}{\sqrt{42}}\right\}} \exp\left[-\frac{(r_I-p_I)^2}{2\sigma^2}\right],$$

and where:

$$L_{64,3}(r_I,\sigma) = \log \frac{\exp\left[-\frac{\left(r_I+\frac{3}{\sqrt{42}}\right)^2}{2\sigma^2}\right] + \exp\left[-\frac{\left(r_I+\frac{1}{\sqrt{42}}\right)^2}{2\sigma^2}\right] + \exp\left[-\frac{\left(r_I-\frac{1}{\sqrt{42}}\right)^2}{2\sigma^2}\right] + \exp\left[-\frac{\left(r_I-\frac{3}{\sqrt{42}}\right)^2}{2\sigma^2}\right]}{\exp\left[-\frac{\left(r_I+\frac{7}{\sqrt{42}}\right)^2}{2\sigma^2}\right] + \exp\left[-\frac{\left(r_I+\frac{5}{\sqrt{42}}\right)^2}{2\sigma^2}\right] + \exp\left[-\frac{\left(r_I-\frac{5}{\sqrt{42}}\right)^2}{2\sigma^2}\right] + \exp\left[-\frac{\left(r_I-\frac{7}{\sqrt{42}}\right)^2}{2\sigma^2}\right]}.$$

The range for the LLR coefficient A can be from $\sqrt{42}/21$ to $4\sqrt{42}/21$, and the values of $\sigma$ can be taken from 0.1 to 1.

Fig. 17 shows a plot of the LLR error depending on the first LLR coefficient A for bit-3 or bit-4 of 64QAM. As can be gathered from Fig. 17, the optimal values of the first LLR coefficient $K_{64,3}^{(1)}(\sigma)$ - which provides minimal expected LLR error - changes with the value of $\sigma$.

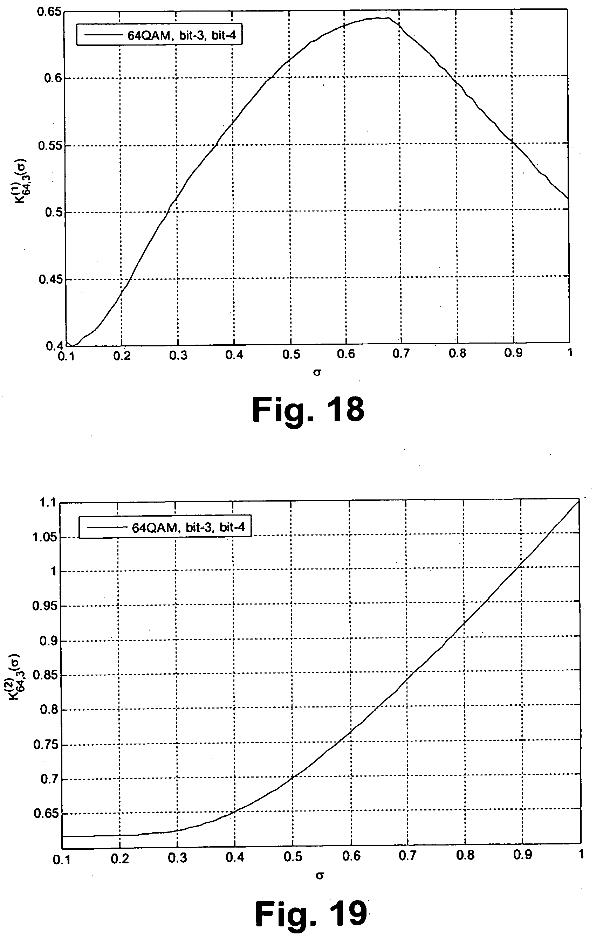

Fig. 18 shows a plot of the optimal values of the first LLR coefficient $K_{64,3}^{(1)}(\sigma)$ for the proposed LLR approximation depending on $\sigma$ for bit-3 or bit-4 of 64QAM. These values may be stored in a lookup table at the receiver and used for the proposed LLR approximation.

Fig. 19 shows a plot of the optimal values of the second LLR coefficient $B/A = K_{64,3}^{(2)}(\sigma)$ used for the proposed LLR approximation depending on $\sigma$ for bit-3 or bit-4 of 64QAM.

The approximation for bit-5 and 6 of 64QAM can be written as follows:

$$\hat{L}_{64,5}(\sigma) = -\left|\frac{A}{\sigma^2}|r_I| - \frac{B}{\sigma^2}\right| + \frac{C}{\sigma^2}$$

where $A, B, C > 0$.

The plot for the reference LLR approximation for $\sigma = 0.5$ has been shown in Fig. 8. As can be gathered from Fig. 8, there are 4 points where LLR changes the sign. Since the LLR sign is the most important from performance point of view B and C can be expressed using A and the zero crossing points $r_0$ and $r_1$ which from Fig. 8 are limited with $0 < r_0 < 4/\sqrt{42}$ and $4/\sqrt{42} < r_1 < 8/\sqrt{42}$. It is noted that $r_0$ and $r_1$ depend on $\sigma$ and hence denoted as $r_0(\sigma)$ and $r_1(\sigma)$, respectively.

The zero crossing points for $r > 0$ can be written as:

$$0 = -\left|\frac{A}{\sigma^2}|r| - \frac{B}{\sigma^2}\right| + \frac{C}{\sigma^2}$$

since the LLR function is symmetric to the y-axis, r > 0 can be assumed. In this case, the above expression simplifies to:

$$\left|\frac{A}{\sigma^2}r - \frac{B}{\sigma^2}\right| = \frac{C}{\sigma^2}$$

and by removing $\sigma$, it is obtained:

$$Ar - B = \pm C.$$

Hence:

$$r_{0,1} = \frac{B \pm C}{A}$$

is obtained. Since $B > C$ these can be expressed using $r_0$ and $r_1$ where $r_0 < r_1$:

$$B = \frac{A(r_0 + r_1)}{2}$$

and

$$C = \frac{A(r_1 - r_0)}{2}$$

can be written. Using these expressions the approximation can be rewritten as:

$$\hat{L}_{64,5}(\sigma) = -\left| \frac{A}{\sigma^2}|r_I| - \frac{A(r_0 + r_1)}{2\sigma^2} \right| + \frac{A(r_1 - r_0)}{2\sigma^2}$$

And

$$\hat{L}_{64,5}(\sigma) = -\frac{K(\sigma)}{\sigma^2}\left( \left| |r_I| - \frac{(r_0 + r_1)}{2} \right| - \frac{(r_1 - r_0)}{2} \right)$$

If we further define that:

$$K_{64,5}^{(2)}(\sigma) = \frac{r_0(\sigma) + r_1(\sigma)}{2}$$

and that

$$K_{64,5}^{(3)}(\sigma) = \frac{r_1(\sigma) - r_0(\sigma)}{2}$$

the approximation can be rewritten to:

$$\hat{L}_{64,5}(\sigma) = -\frac{K_{64,5}^{(1)}(\sigma)}{\sigma^2}\left( \left| |r_I| - K_{64,5}^{(2)}(\sigma) \right| - K_{64,5}^{(3)}(\sigma) \right)$$

Where the optimal values of the first, second, and third LLR coefficient, i.e. $K_{64,5}^{(1)}(\sigma)$, $K_{64,5}^{(2)}(\sigma)$, and $K_{64,5}^{(3)}(\sigma)$, can be provided with lookup tables. In this case:

$$K_{64,5}^{(1)}(\sigma) = \arg\min_{A} \int_{r_l \in R} p_{64}(r_l, \sigma) \cdot \left| L_{64,5}(r_l, \sigma) + \frac{A}{\sigma^2} \left( \|r_l| - K_{64,5}^{(2)}(\sigma)\| - K_{64,5}^{(3)}(\sigma) \right) \right| \cdot dr_l.$$

where:

$$R = \left( -\frac{7}{\sqrt{42}} - 3\sigma, \frac{7}{\sqrt{42}} + 3\sigma \right),$$

$$p_{64}(r_l, \sigma) = \sum_{p_l \in \left\{ \pm\frac{1}{\sqrt{42}}, \pm\frac{3}{\sqrt{42}}, \pm\frac{5}{\sqrt{42}}, \pm\frac{7}{\sqrt{42}} \right\}} \exp\left[ -\frac{(r_l - p_l)^2}{2\sigma^2} \right],$$

and where:

$$L_{64,5}(r_l, \sigma) = \log \frac{\exp\left[-\frac{\left(r_l + \frac{5}{\sqrt{42}}\right)^2}{2\sigma^2}\right] + \exp\left[-\frac{\left(r_l + \frac{3}{\sqrt{42}}\right)^2}{2\sigma^2}\right] + \exp\left[-\frac{\left(r_l - \frac{3}{\sqrt{42}}\right)^2}{2\sigma^2}\right] + \exp\left[-\frac{\left(r_l - \frac{5}{\sqrt{42}}\right)^2}{2\sigma^2}\right]}{\exp\left[-\frac{\left(r_l + \frac{7}{\sqrt{42}}\right)^2}{2\sigma^2}\right] + \exp\left[-\frac{\left(r_l + \frac{1}{\sqrt{42}}\right)^2}{2\sigma^2}\right] + \exp\left[-\frac{\left(r_l - \frac{1}{\sqrt{42}}\right)^2}{2\sigma^2}\right] + \exp\left[-\frac{\left(r_l - \frac{7}{\sqrt{42}}\right)^2}{2\sigma^2}\right]}.$$

The range for the LLR coefficient A can be from $\sqrt{42}/42$ until $2\sqrt{42}/21$, and the values of $\sigma$ can be taken from 0.1 to 1 and the $K_{64,5}^{(2)}(\sigma)$ and $K_{64,5}^{(3)}(\sigma)$ values can be figured out according to Axiom-1 from the requirement $L_{64,5}(r_1, \sigma) = 0$ by finding first solution for $r_0(\sigma)$ in the range of $\left(0, 4/\sqrt{42}\right)$ and solution for $r_1(\sigma)$ in the range of $\left(4/\sqrt{42}, 8/\sqrt{42}\right)$. These values can be used to setup the lookup tables using:

$$K_{64,5}^{(2)}(\sigma) = \frac{r_0(\sigma) + r_1(\sigma)}{2}$$

and

$$K_{64,5}^{(3)}(\sigma) = \frac{r_1(\sigma) - r_0(\sigma)}{2}$$

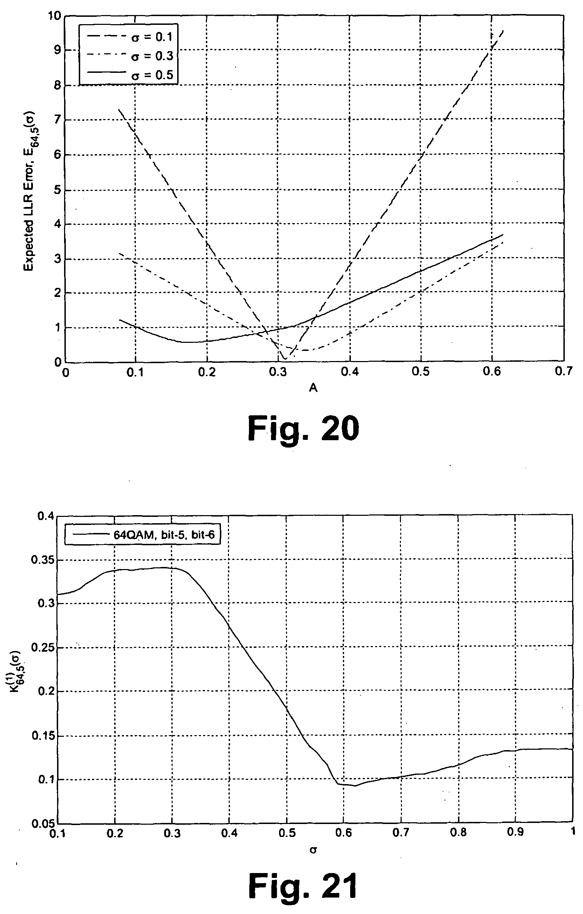

Fig. 20 shows a plot of the expected LLR error depending on the first LLR coefficient for bit-5 or bit-6 of 64QAM.
Fig. 21 shows a plot of the optimal values of the first LLR coefficient for the proposed LLR approximation depending on $\sigma$ for bit-5 or bit-6 of 64QAM.

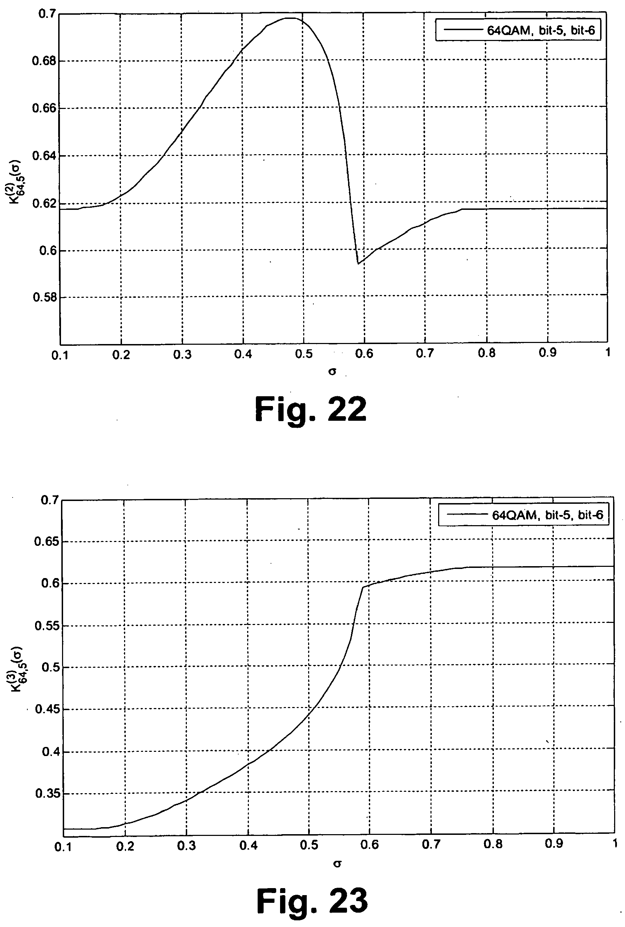

Fig. 22 shows a plot of the optimal values of the second LLR coefficient for the proposed LLR approximation depending on $\sigma$ for bit-5 or bit-6 of 64QAM.

Fig. 23 shows a plot of the optimal values of the third LLR coefficient for the proposed LLR approximation depending on $\sigma$ for bit-5 or bit-6 of 64QAM.

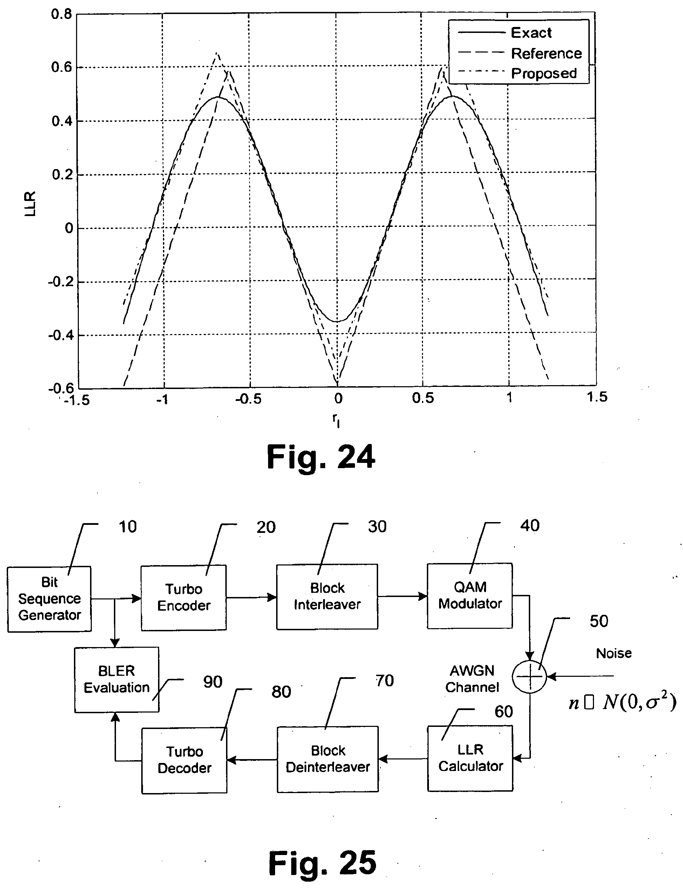

Fig. 24 shows a comparison plot of the exact LLR calculation, reference and proposed LLR approximations for bit-5 or bit-6 of 64QAM for $\sigma$ = 0.4. As can be gathered from Fig. 24, the proposed approximation is much better than the reference approximation and is very close to the exact LLR. In Fig. 24, the LLR for bit-5 or bit-6 of 64QAM has been extracted from the real or imaginary part of the received sample, respectively.

Fig. 25 shows a block diagram of a simulated communication system used for BLER performance evaluation of exact LLR calculation, reference and proposed LLR approximation.

In a transmission chain, a bit sequence generator 10 generates a bit sequence to be transmitted, which is encoded by a turbo coder 20 and blockwise interleaved by a block interleaver 30. Then, the encoded and interleaved bit sequence is 16QAM or 64QAM modulated in a QAM modulator 40. Noise is added to the modulated output signal in a summing unit 50 to simulate transmission via an AWGN channel. Furthermore, in a reception chain, the noisy modulation signal is supplied to an LLR approximator or calculator 60 where the proposed LLR approximation is applied, e.g., based on the above mentioned optimal coefficients derived from a lookup table (not shown) and the received signal is demodulated or de-mapped. Then, the blocks of the received signal are de-interleaved in a block de-interleaver 70 and the bit sequence is decoded in a turbo decoder 80. Finally, the obtained decoded bit sequence is compared to the generated bit sequence of the transmission chain in a BLER evaluator 90 so as to derive the BLER.

The detailed simulations may consider up to 500,000 code words per SNR. The block interleaver 30 may be a Wideband Code Division Multiple Access (WCDMA) interleaver of size 400 bits. The selected component convolutional code generator polynomials for the turbo encoder 20 can be (013, 015) and the block interleaver 30 may be of a size 101 x12 before the 16QAM modulator 40.

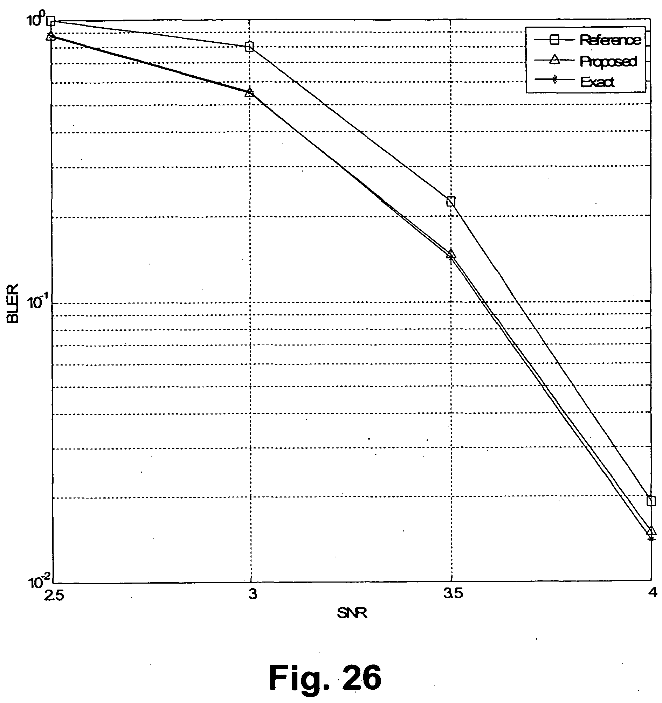

Fig. 26 shows a plot of BLER performance results for 16QAM when exact LLR calculation, reference and proposed LLR approximations are used. Simulation has been performed for 50,000 code words per SNR point using the setup shown in Fig. 25 for 16QAM. The line with star symbols corresponds to the results of the exact LLR, while the line with square symbols corresponds to the reference approximation and the line with triangular symbols to the proposed approximation. As can be gathered from Fig. 26, the proposed approximation improves the BLER performance by 0.1dB for BLER = 0.1 which is the most used operation region for LTE systems.

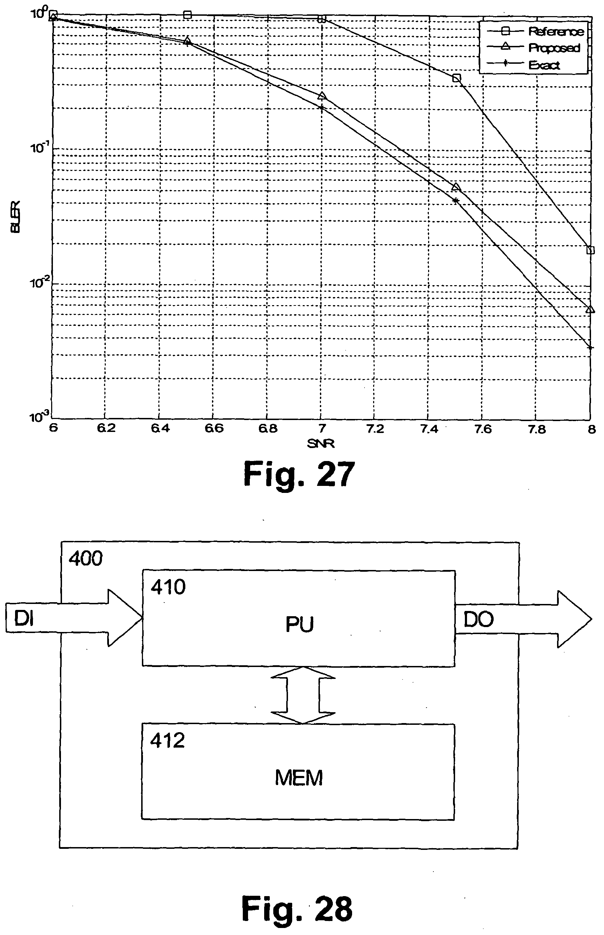

Fig. 27 shows a plot of BLER performance results for 64QAM when exact LLR calculation, reference and proposed LLR approximations are used. Again, the simulation has been performed for 500,000 code words per SNR point using the setup shown in Fig. 25 for 64QAM. The line with square symbols corresponds to the reference approximation and the line with triangular symbols corresponds to the proposed approximation, while the line with star symbols corresponds to the exact LLR. As can be gathered from Fig. 27, the proposed approximation improves the BLER performance with 0.5 dB for BLER of 0.1 which is the most used operation region for LTE systems.

Fig. 28 shows a schematic block diagram of a software-based implementation of the above first and second embodiments. The required functionalities can be implemented in a demapper or LLR approximator or LLR calculator of a receiver with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the approximation steps described above, which may be implemented as the above mentioned software routines. The approximation steps may be performed on the basis of input data DI and may generate output data DO. In case of the present LLR approximation, the input data DI may correspond to the received noisy QAM modulation signal and the output data DO may correspond to the approximated LLR values or the demapped bit sequence.

Consequently, the functionalities of the above embodiments may be implemented as a computer program product comprising code means for generating each individual step of the frame alignment procedure when run on a computer device or data processor of the respective entity.

In summary, a method and apparatus for approximating a log-likelihood ratio (LLR) as a piecewise linear function have been described, where the function changes depending on the value of the noise variance $\sigma$, so that the exact LLR function can be approximated with minimum error considering the LLR value distribution, and so that the LLR's that are expected more often are much closely approximated to the exact LLR than the LLR's that are not expected so often.

The proposed LLR approximation can be applied to both user equipment (UE) and enhanced NodeBs (eNodeB) or other access device implementations in communication systems. It improves the decoding performance of receivers, so that correct decoding is possible for lower SNRs. It is apparent that the invention can easily be extended to any receiver environment for QAM signals which may include a collection of hardware and software technologies where some or all of the operating functions are implemented through modifiable software or firmware operating on programmable processing technologies. Such devices include field programmable gate arrays (FPGAs), DSPs, general purpose processors (GPPs), programmable System on Chip (SoC) or other application specific programmable processors. The use of these technologies allows new wireless features and capabilities to be added to existing radio systems without requiring new hardware.

**Claims**

1. A method of approximating an exact log-likelihood ratio, LLR, calculation for quadrature amplitude modulation, QAM, signals in a receiver, said method comprising employing a piecewise linear approximation to determine respective values of a plurality of LLR coefficients $K_{i,j}^{(k)}$, where $i$ corresponds to a QAM constellation, $j$ corresponds to a QAM constellation bit index, and $k$ corresponds to an LLR coefficient index, wherein said method further comprises:

   a. if $k$ is larger than one, deriving LLR coefficients $K_{i,j}^{(k)}$ based on a requirement that said exact LLR calculation and said LLR approximation have the same sign for a specific value of the standard deviation of a channel noise distribution; and

   b. if $k$ is equal to one, deriving an optimal value of the LLR coefficient $K_{i,j}^{(1)}$ based on a minimization of an expected LLR error between said exact LLR calculation and said LLR approximation by searching for the optimal value of the LLR coefficient $K_{i,j}^{(1)}$ that minimizes the expected LLR error for the specific value of the standard deviation of the channel noise distribution.

2. The method according to claim 1, wherein said optimal values of the LLR coefficients are derived in dependence on the QAM constellation, the constellation bit index and said LLR coefficient index.

3. The method according to claim 1 or 2, wherein said optimal values of the LLR coefficients are derived in dependence on said standard deviation of said channel noise distribution.

4. The method according to any one of the preceding claims, wherein said QAM signal is a 16QAM or 64QAM signal.

5. An apparatus for approximating an exact log-likehood ratio, LLR, calculation for quadrature amplitude modulation, QAM, signals in a receiver, said apparatus being adapted to employ a piecewise linear approximation to determine respective values of a plurality of LLR coefficients $K_{i,j}^{(k)}$, where $i$ corresponds to a QAM constellation, $j$ corresponds to a QAM constellation bit index, and $k$ corresponds to an LLR coefficient index, where said apparatus is further adapted:

   a. to derive the optimal values of the LLR coefficients $K_{i,j}^{(k)}$ based on a requirement that said exact LLR calculation and said LLR approximation have the same sign for a specific value of the standard deviation of a channel noise distribution, if $k$ is larger than one; and

   b. to derive an optimal values of the LLR coefficient $K_{i,j}^{(1)}$ based on a minimization of an expected LLR error between said exact LLR calculation and an LLR approximation using a computer based search for the optimal value of the LLR coefficient $K_{i,j}^{(1)}$ that minimizes the expected LLR error for a specific value of the standard deviation of a channel noise distribution, if $k$ is equal to one.

6. The apparatus according to claim 5, further comprising a lookup table storing or using polynomial approximation for generation of the said optimal values of the LLR coefficients.

7. The apparatus according to claim 5 or 6, further comprising a demapper for using said derived optimal values of the LLR coefficients for demodulating said QAM signal.

8. A receiver for receiving a QAM signal, said receiver comprising an apparatus according to claim 5.

9. A computer program product comprising code means for producing the steps of method claim 1 when run on a computer device.

**Patentansprüche**

1. Verfahren zum Approximieren einer exakten Log-Likelihood-Verhältnis-, LLR, -Berechnung für Quadraturamplitudenmodulation-, QAM, -Signale in einem Empfänger, wobei das Verfahren ein Verwenden einer stückweise linearen Approximation zum Bestimmen entsprechender Werte einer Mehrzahl von LLR-Coeffizienten $K_{i,j}^{(k)}$ umfasst, wobei $i$ zu einer QAM-Konstellation korrespondiert, $j$ zu einem QAM-Konstellation-Bitindex korrespondiert, und $k$ zu einem LLR-Koeffizienten-Index korrespondiert, wobei das Verfahren des Weiteren umfasst:

   a. falls $k$ größer ist als Eins, Ableiten der LLR-Koeffizienten $K_{i,j}^{(k)}$ basierend auf einer Anforderung, dass die exakte LLR-Berechnung und die LLR-Approximation dasselbe Vorzeichen für einen spezifischen Wert der Standardabweichung einer Kanalrauschverteilung aufweisen; und

   b. falls $k$ gleich Eins ist, Ableiten eines optimalen Werts des LLR-Koeffizienten $K_{i,j}^{(1)}$ basierend auf einer Minimierung eines erwarteten LLR-Fehlers zwischen der exakten LLR-Berechnung und der LLR-Approximation durch Suchen nach dem optimalen Wert des LLR-Koeffizienten $K_{i,j}^{(1)}$, der den erwarteten LLR-Fehler für den spezifischen Wert der Standardabweichung der Kanalrauschverteilung minimiert.

2. Verfahren nach Anspruch 1, wobei die optimalen Werte der LLR-Koeffizienten in Abhängigkeit von der QAM-Konstellation, dem Konstellation-Bitindex und dem LLR-Koeffizienten-Index abgeleitet werden.

3. Verfahren nach Anspruch 1 oder 2, wobei die optimalen Werte der LLR-Koeffizienten in Abhängigkeit von der Standardabweichung der Kanalrauschverteilung abgeleitet werden.

4. Verfahren nach einem der vorangegangenen Ansprüche, wobei das QAM-Signal ein 16QAM- oder ein 64QAM-Signal ist.

5. Vorrichtung zum Approximieren einer exakten Log-Likelihood-Verhältnis-, LLR,

   - Berechnung für Quadraturamplitudenmodulation-, QAM, -Signale in einem Empfänger, wobei die Vorrichtung angepasst ist, eine stückweise lineare Approximation zum Bestimmen entsprechender Werte einer Mehrzahl von LLR-Coeffizienten $K_{i,j}^{(k)}$ zu verwenden, wobei $i$ zu einer QAM-Konstellation korrespondiert, $j$ zu einem QAM-Konstellation-Bitindex korrespondiert, und $k$ zu einem LLR-Koeffizienten-Index korrespondiert, wobei die Vorrichtung des Weiteren angepasst ist:

   a. zum Ableiten der optimalen Werte der LLR-Koeffizienten $K_{i,j}^{(k)}$ basierend auf einer Anforderung, dass die exakte LLR-Berechnung und die LLR-Approximation dasselbe Vorzeichen für einen spezifischen Wert der Standardabweichung einer Kanalrauschverteilung aufweisen, falls $k$ größer ist als Eins; und

   b. zum Ableiten eines optimalen Werts des LLR-Koeffizienten $K_{i,j}^{(1)}$ basierend auf einer Minimierung eines erwarteten LLR-Fehlers zwischen der exakten LLR-Berechnung und der LLR-Approximation unter Verwendung einer computer-basierten Suche nach dem optimalen Wert des LLR-Koeffizienten $K_{i,j}^{(1)}$, der den erwarteten LLR-Fehler für einen spezifischen Wert der Standardabweichung einer Kanalrauschverteilung minimiert, falls $k$ gleich Eins ist.

6. Vorrichtung nach Anspruch 5, des Weiteren umfassend eine Lookup-Tabelle, die eine polynominale Approximation zum Erzeugen der optimalen Werte der LLR-Koeffizienten speichert oder nutzt.

7. Verfahren nach Anspruch 5 oder 6, des Weiteren umfassend einen Demapper zum Verwenden der abgeleiteten optimalen Werte der LLR-Koeffizienten zum Demodulieren des QAM-Signals.

8. Empfänger zum Empfangen eines QAM-Signals, wobei der Empfänger eine Vorrichtung nach Anspruch 5 umfasst.

9. Computerprogrammprodukt, umfassend Codemittel zum Erzeugen der Schritte des Verfahrensanspruchs 1, wenn diese auf einem Computergerät ausgeführt werden.

**EP 2 611 092 B1**

**Revendications**

1. Procédé d'approximation d'un calcul exact de rapport de probabilité logarithmique, LLR, pour des signaux de modulation d'amplitude en quadrature, QAM, dans un récepteur, le procédé comprenant utiliser une approximation linéaire par morceau pour déterminer des valeurs respectives d'une pluralité de coefficients $K_{i,j}^{(k)}$ de LLR, $i$ correspondant à une constellation de QAM, $j$ correspondant à un indice de bit de constellation et $k$ correspondant à un indice de coefficient de LLR, le procédé comprenant, en outre :

   a. si $k$ est plus grand que un, déduire des coefficients $K_{i,j}^{(k)}$ de LLR sur la base de l'exigence que le calcul exact de LLR et l'approximation de LLR ont le même signe pour une valeur précise de l'écart-type d'une distribution de bruit de canal et

   b. si $k$ est égal à un, déduire une valeur optimum du coefficient $K_{i,j}^{(1)}$ de LLR sur la base d'une minimisation d'une erreur escomptée sur LLR entre le calcul exact de LLR et l'approximation de LLR, en cherchant la valeur optimum du coefficient $K_{i,j}^{(1)}$ de LLR, qui minimise l'erreur escomptée sur LLR pour la valeur précise de l'écart-type de la distribution du bruit de canal.

2. Procédé suivant la revendication 1, dans lequel on déduit les valeurs optimum des coefficients de LLR en fonction de la constellation de QAM, de l'indice de bit de constellation et de l'indice de coefficient de LLR.

3. Procédé suivant la revendication 1 ou 2, dans lequel on déduit les valeurs optimum des coefficients de LLR en fonction de l'écart-type de la distribution du bruit de canal.

4. Procédé suivant l'une quelconque des revendications précédentes, dans lequel le signal QAM est de 16QAM ou de 64QAM.

5. Dispositif d'approximation d'un calcul exact d'un rapport de probabilité logarithmique, LLR, pour des signaux de modulation d'amplitude en quadrature QAM dans un récepteur, le dispositif étant conçu pour employer une approximation linéaire par morceau afin de déterminer des valeurs respectives d'une pluralité de coefficients $K_{i,j}^{(k)}$ de LLR, $i$ correspondant à une constellation de QAM, $j$ correspondant à un indice de bit de constellation de QAM et $k$ correspondant à un indice de coefficient de LLR, le dispositif étant agencé, en outre :

   a. pour déduire les valeurs optimum des coefficients $K_{i,j}^{(k)}$ de LLR sur la base de l'exigence que le calcul exact de LLR et l'approximation de LLR ont le même signe pour une valeur précise de l'écart-type d'une distribution du bruit de canal, si $k$ est plus grand que un et

   b. pour déduire une valeur optimum du coefficient $K_{i,j}^{(1)}$ de LLR sur la base d'une minimisation de l'erreur escomptée sur LLR entre le calcul exact de LLR et une approximation de LLR, en utilisant une recherche assistée par ordinateur de la valeur optimum du coefficient $K_{i,j}^{(1)}$ de LLR, qui minimise l'erreur escompté sur LLR pour une valeur précise de l'écart-type d'une distribution du bruit de canal, si $k$ est égal à un.

6. Dispositif suivant la revendication 5, comprenant, en outre, une table de consultation mémorisant ou utilisant une approximation polynomiale pour créer les valeurs optimum des coefficients de LLR.

7. Dispositif suivant la revendication 5 ou 6, comprenant, en outre, un démodulateur pour utiliser les valeurs optimum déduites des coefficients de LLR, afin de démoduler les signaux QAM.

8. Récepteur de réception d'un signal QAM, le récepteur comprenant un dispositif suivant la revendication 5.

9. Produit de programme d'ordinateur comprenant des moyens de code pour produire les stades de la revendication 1 de procédé, lorsqu'il passe sur un dispositif d'ordinateur.

**Fig. 1**

**Fig. 2**

Fig. 3

Fig. 4

**Fig. 5**

**Fig. 6**

**Fig. 7**

**Fig. 8**

**Fig. 9**

## Fig. 10

## Fig. 11

## Fig. 12

## Fig. 13

## Fig. 14

## Fig. 15

Fig. 16

Fig. 17

**Fig. 18**

**Fig. 19**

Fig. 20

Fig. 21

**Fig. 22**

**Fig. 23**

**Fig. 24**

**Fig. 25**

**Fig. 26**

**Fig. 27**

**Fig. 28**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040091058 A1
- US 20090245433 A1
- US 20080232499 A1
- WO 2007106876 A2

### Non-patent literature cited in the description

- **TOSATO ; BISAGLIA.** Simplified soft-output demapper for binary interleaved COFDM with application to HIPERLAN/2. *IEEE International Conference on Communications,* 2002, vol. 2, ISBN 0-7803-7400-2, 664-668
- **PYNDIAH et al.** Performance of block turbo coded 16-QAM and 64-QAM modulations. *IEEE Global Telecommunications Conference,* 1995, vol. 2, ISBN 0-7803-2509-5, 1039-1043
- **ALLPRESS et al.** Exact and approximated expressions of the log-likelihood ratio for 16-QAM signals. *Thirty-Eighth Asilomar Conference on Signals, Systems and Computers,* 2004, vol. 1, ISBN 0-7803-8622-1, 794-798
- **KANG et al.** A New Demapper for BICM System with HARQ. *IEEE 70th Vehicular Technology Conference Fall (VTC 2009-Fall),* ISBN 978-1-4244-2514-3, 1-5